# EUROPEAN PATENT APPLICATION

(11) **EP 4 596 184 A1**
(43) Date of publication of application: **06.08.2025**
(21) Application number: 23872457.9
(22) Date of filing: 27.09.2023
(51) Int. Cl.: B25J 13/00, B25J 19/06

(54) **OPERATION PATH SETTING DEVICE AND PROGRAM**

(30) Priority: 30.09.2022 JP 2022158628
(71) Applicant: Kyocera Corporation, Kyoto-shi, Kyoto 612-8501 (JP)
(72) Inventor: MIYAMOTO Takuya, Kyoto-shi, Kyoto 612-8501 (JP); BUNNO Sho, Kyoto-shi, Kyoto 612-8501 (JP); MIYAMURA Hiroaki, Kyoto-shi, Kyoto 612-8501 (JP); ISHIDA Takayuki, Kyoto-shi, Kyoto 612-8501 (JP); MORI Masato, Kyoto-shi, Kyoto 612-8501 (JP); OHASHI Akira, Kyoto-shi, Kyoto 612-8501 (JP); ONO Kazuki, Kyoto-shi, Kyoto 612-8501 (JP)
(74) Representative: TBK
(86) International application number: PCT/JP2023/035245
(87) International publication number: WO 2024/071235

(57) **Abstract**

A motion path setting device includes a candidate obtainer, a determiner, and a path setter. The candidate obtainer obtains a plurality of candidate motion paths from a starting point to an ending point of a robot motion based on a first tentative motion path in a multidimensional space being a physical workspace of a robot or a configuration space of the robot. The first tentative motion path is a shortest path connecting the starting point and the ending point. The determiner determines whether the robot interferes with an obstacle on at least one of the plurality of candidate motion paths. The path setter sets a motion path of the robot based on a determination result from the determiner.

## Description

### TECHNICAL FIELD

The present disclosure relates to a technique for setting the motion path of a robot.

### BACKGROUND OF INVENTION

Patent Literature 1 describes a technique for motion path planning for a robot.

### CITATION LIST

### PATENT LITERATURE

Patent Literature 1: Japanese Unexamined Patent Application Publication No. 2000-20117

### SUMMARY

One or more aspects of the present disclosure are directed to a motion path setting device and a program. In one embodiment, a motion path setting device includes a candidate obtainer, a determiner, and a path setter. The candidate obtainer obtains a plurality of candidate motion paths from a starting point to an ending point of a robot motion based on a first tentative motion path in a multidimensional space being a physical workspace of a robot or a configuration space of the robot. The first tentative motion path is a shortest path connecting the starting point and the ending point. The determiner determines whether the robot interferes with an obstacle on at least one of the plurality of candidate motion paths. The path setter sets a motion path of the robot based on a determination result from the determiner.

In one embodiment, a program causes a computer to perform obtaining a plurality of candidate motion paths from a starting point to an ending point of a robot motion based on a tentative motion path in a multidimensional space being a physical workspace of a robot or a configuration space of the robot. The tentative motion path is a shortest path connecting the starting point and the ending point. The program also causes the computer to perform determining whether the robot interferes with an obstacle on at least one of the plurality of candidate motion paths. The program also causes the computer to perform setting a motion path of the robot based on a result of the determining.

### BRIEF DESCRIPTION OF THE DRAWINGS

FIG. 1 is a block diagram of a motion path setting device, illustrating an example structure.
FIG. 2 is a schematic diagram of an example physical workspace.
FIG. 3 is a schematic diagram of a robot, illustrating an example structure.
FIG. 4 is a schematic diagram of the robot with its shape represented by multiple rectangular prisms in an example.
FIG. 5 is a flowchart of an example operation of the motion path setting device.
FIG. 6 is a schematic diagram describing an example method for obtaining a candidate motion path.
FIG. 7 is a schematic diagram describing an example method for obtaining a candidate motion path.
FIG. 8 is a schematic diagram describing an example method for obtaining a candidate motion path.
FIG. 9 is a schematic diagram describing an example method for obtaining a candidate motion path.
FIG. 10 is a schematic diagram describing an example method for obtaining a candidate motion path.
FIG. 11 is a schematic diagram describing an example method for obtaining a candidate motion path.
FIG. 12 is a schematic diagram describing an example method for obtaining a candidate motion path.
FIG. 13 is a schematic diagram describing an example method for obtaining a candidate motion path.
FIG. 14 is a schematic diagram describing an example method for obtaining a candidate motion path.
FIG. 15 is a schematic diagram describing an example method for obtaining a candidate motion path.
FIG. 16 is a schematic diagram describing an example method for obtaining a candidate motion path.
FIG. 17 is a schematic diagram describing an example method for obtaining a candidate motion path.
FIG. 18 is a schematic diagram describing an example method for obtaining a candidate motion path.
FIG. 19 is a schematic diagram describing an example method for obtaining a candidate motion path.
FIG. 20 is a schematic diagram describing an example method for obtaining a candidate motion path.
FIG. 21 is a schematic diagram describing an example method for obtaining a candidate motion path.
FIG. 22 is a schematic diagram describing an example method for setting a motion path.
FIG. 23 is a schematic diagram describing an example method for setting a motion path.
FIG. 24 is a flowchart of an example operation of a controller.
FIG. 25 is a schematic diagram describing an example method for setting a motion path.
FIG. 26 is a schematic diagram describing an example method for setting a motion path.
FIG. 27 is a schematic diagram describing an example method for setting a motion path.
FIG. 28 is a schematic diagram describing an example method for setting a motion path.
FIG. 29 is a schematic diagram describing an example method for setting a motion path.
FIG. 30 is a flowchart of an example operation of the motion path setting device.
FIG. 31 is a schematic diagram of an example configuration space.
FIG. 32 is a schematic diagram describing an example operation of a determiner.
FIG. 33 is a schematic diagram of an example restricted configuration space.
FIG. 34 is a schematic diagram describing an example operation of the determiner.

### DESCRIPTION OF EMBODIMENTS

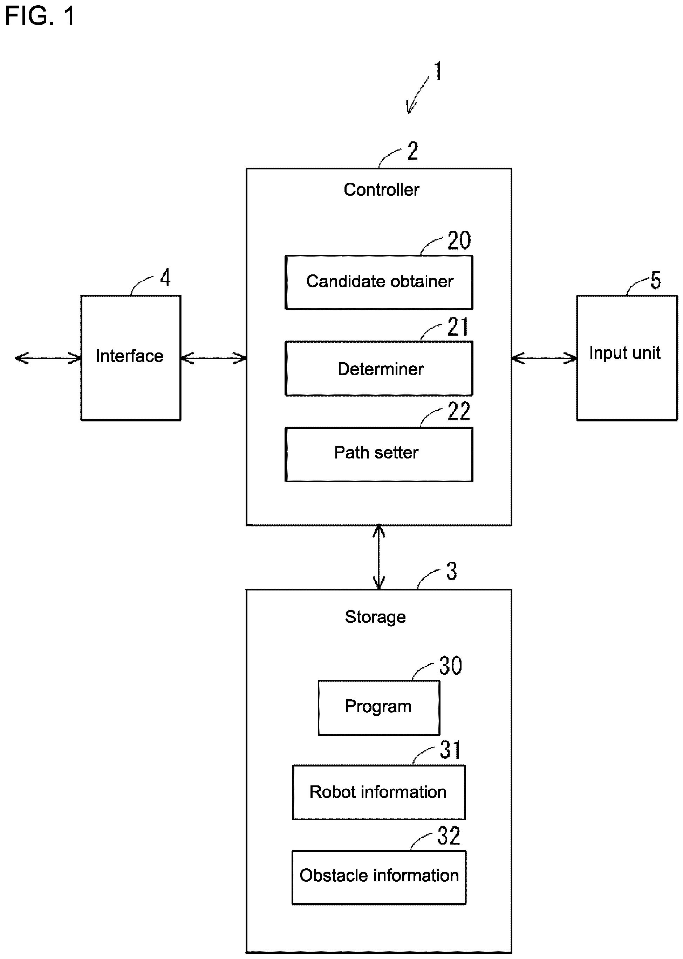

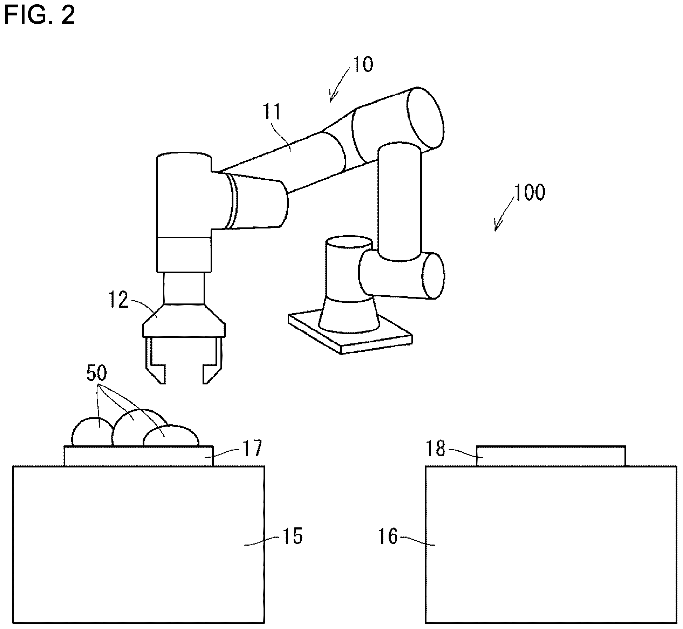

FIG. 1 is a block diagram of a motion path setting device 1 that sets the motion path of a robot 10, illustrating an example structure. FIG. 2 is a schematic diagram of an example physical workspace (also referred to as a work environment or a work area) 100 in which the robot 10 performs a task. The physical workspace 100 is a multidimensional space. More specifically, the physical workspace 100 is a three-dimensional space.

The robot 10 transfers, for example, a task target object 50 (also simply referred to as a target object 50) from a source area to a destination area in the physical workspace 100. The robot 10 holds the target object 50 in the source area and transfers the target object 50 from the source area to the destination area. For example, the robot 10 holds and transfers the target object 50 from the source area to the destination area by changing the posture of the robot 10. The target object 50 is also referred to as, for example, a workpiece. The posture of the robot 10 is hereafter also referred to as a robot posture.

The source area and the destination area are, for example, trays. A tray 17 as the source area (also referred to as a source tray 17) receives multiple task target objects 50. For example, the robot 10 holds the task target objects 50 on the source tray 17 one by one and transfers the task target objects 50 to a tray 18 as the destination area (also referred to as a destination tray 18). For example, the source tray 17 is on a worktable 15, and the destination tray 18 is on a worktable 16. The worktable 15 may be a starting worktable 15. The worktable 16 may be a destination worktable 16. The robot 10 may transfer the target object 50 from the starting worktable 15 to the destination worktable 16. Note that at least one of the source area or the destination area may be other than a tray. For example, at least one of the source area or the destination area may be a belt conveyor or a shelf.

The robot 10 includes, for example, an arm 11 and a robot hand 12 (also simply referred to as a hand 12) connected to the arm 11. The robot hand 12 is also referred to as an end-effector. The robot hand 12 can hold the target object 50. For example, the robot hand 12 can grip the target object 50 with two fingers. Such a robot hand 12 is also referred to as a gripper. Note that the structure of the robot hand 12 is not limited to the above example. For example, the robot hand 12 may include a suction nozzle that sucks the target object 50.

The robot 10 holds the target object 50 on the source tray 17 with the robot hand 12. The robot 10 moves the arm 11 with the robot hand 12 holding the target object 50 to transfer the target object 50 to the destination tray 18. For example, the robot 10 transfers the target object 50 to the destination tray 18 by changing the posture of the arm 11. Note that the task performed by the robot 10 is not limited to the above.

The robot 10 is, for example, a six-axis robot. The robot 10 has, for example, six movement axes. The robot 10 has, for example, six degrees of freedom. The arm 11 of the robot 10 includes, for example, six joints each movable about the corresponding one of the movement axes.

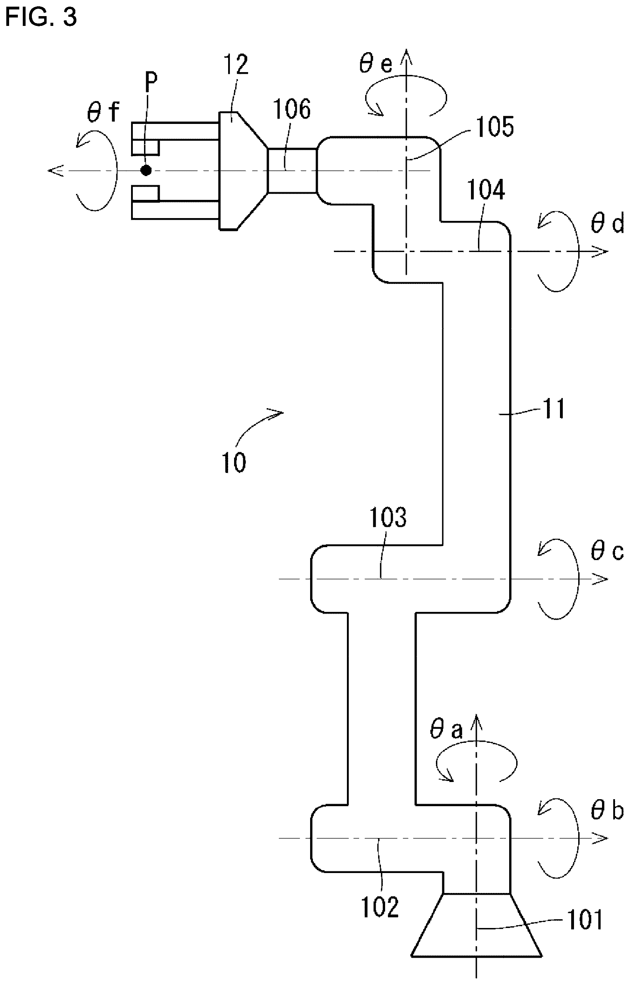

FIG. 3 is a schematic diagram of six movement axes 101, 102, 103, 104, 105, and 106 of the robot 10 in an example. In FIG. 3, the rotation angles of the arm 11 about the movement axes 101, 102, 103, 104, 105, and 106 are respectively indicated by θa, θb, θc, θd, θe, and θf. The rotation angles θa, θb, θc, θd, θe, and θf are parameters that represent the robot posture. Note that the number of movement axes (in other words, the number of degrees of freedom) of the robot 10 is not limited to the above example. The rotation angles θa, θb, θc, θd,θe, and θf that represent the robot posture may be hereafter referred to as parameters θa, θb, θc, θd, θe, and θf. The rotation angles θa, θb, θc, θd, θe, and θf may be each referred to as a rotation angle θ without being distinguished from one another.

The motion path setting device 1 is, for example, a computer. For example, the motion path setting device 1 can set the motion path of the robot 10, and can also control the robot 10 to move along the set motion path. In other words, the motion path setting device 1 can also function as a robot control device that controls the robot 10. The motion path setting device 1 sets the motion of the robot 10 based on the set motion path. The motion path setting device 1 then outputs robot set-motion data indicating the set motion to the robot 10. The robot 10 performs a motion based on the input robot set-motion data. Note that a robot control device that controls the robot 10 may be prepared separately from the motion path setting device 1. In this case, the motion path set by the motion path setting device 1 is provided to the robot control device. The robot control device generates robot set-motion data based on the provided motion path, and outputs the generated data to the robot 10. The motion path hereafter refers to the motion path of the robot 10.

As illustrated in FIG. 1, the motion path setting device 1 includes, for example, a controller 2, a storage 3, an interface 4, and an input unit 5. The motion path setting device 1 may be, for example, a motion path setting circuit.

The interface 4 can transmit and receive a signal to and from the robot 10. The controller 2 can control the robot 10 through the interface 4. The interface 4 may be, for example, an interface circuit. Note that, when a robot control device that controls the robot 10 is prepared separately from the motion path setting device 1, the motion path setting device 1 may include an interface to transmit and receive a signal to and from the robot control device, in place of the interface 4.

The controller 2 can control other components of the motion path setting device 1 to centrally manage the operation of the motion path setting device 1. The controller 2 may be, for example, a control circuit. The controller 2 includes at least one processor that performs control and processing for implementing various functions, as described in more detail below.

In various embodiments, at least one processor may be a single integrated circuit (IC), or multiple ICs, multiple discrete circuits, or both these circuits connected to one another for mutual communication. At least one processor may be implemented using any of various known techniques.

In one embodiment, the processor includes one or more circuits or units configured to perform one or more data computation procedures or processes by, for example, executing instructions stored in an associated memory. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors (DSPs), programmable logic devices, field programmable gate arrays, combinations of any of these devices or configurations, or combinations of other known devices and configurations. The processor may perform the functions described below.

The controller 2 may include, for example, a central processing unit (CPU) as the processor. The storage 3 may include a non-transitory recording medium readable by the CPU in the controller 2, such as a read-only memory (ROM) and a random-access memory (RAM). The storage 3 stores, for example, a program 30 for controlling the motion path setting device 1. Various functions of the controller 2 are implemented by, for example, the CPU in the controller 2 executing the program 30 in the storage 3.

The storage 3 stores, for example, robot information 31 and obstacle information 32 used to set the motion path, in addition to the program 30. The robot information 31 is information about the robot 10. The robot information 31 includes, for example, information indicating the shape of the robot 10. The obstacle information 32 is information about an obstacle that obstructs the motion of the robot 10 performing a task. The obstacle information 32 includes, for example, information indicating the position of the obstacle and information indicating the shape of the obstacle. The obstacle includes at least one object located in the physical workspace 100. The obstacle includes, for example, the worktable 15, the worktable 16, the tray 17, and the tray 18. The obstacle may include an object other than the worktable 15, the worktable 16, the tray 17, and the tray 18. For example, the obstacle may include at least one of a structure such as a wall or a pole, a chair, a desk, a shelf, a screen, or an illuminator.

Note that the structure of the controller 2 is not limited to the above example. For example, the controller 2 may include multiple CPUs. The controller 2 may include at least one DSP. The functions of the controller 2 may be implemented entirely or partially by a hardware circuit, without using software to implement the functions. The storage 3 may include a non-transitory computer-readable recording medium other than the ROM and the RAM. The storage 3 may include, for example, a small hard disk drive and a solid-state drive (SSD).

The input unit 5 can receive various inputs from a user. The input unit 5 may include, for example, a mouse and a keyboard. The input unit 5 may include a touch sensor that receives touch operations performed by the user. In this case, the motion path setting device 1 may include a display such as a liquid crystal display, and the display and the touch sensor may together serve as a touchscreen display that performs display and detects a touch. The input unit 5 may include a microphone that receives a voice input from the user. The controller 2 identifies the user input received by the input unit 5 based on an output signal from the input unit 5. Note that the motion path setting device 1 may include an interface to communicate with an external device, and may receive an input from the user through the interface.

The controller 2 includes, for example, a candidate obtainer 20, a determiner 21, and a path setter 22. For example, the CPU in the controller 2 executes the program 30 in the storage 3 to implement, as functional blocks, the candidate obtainer 20, the determiner 21, and the path setter 22 in the controller 2. Note that the functions of the candidate obtainer 20 may be implemented entirely or partially by a hardware circuit, without using software to implement the functions. The determiner 21 and the path setter 22 also have the same or a similar structure.

The candidate obtainer 20 performs a process of obtaining multiple candidate motion paths from a starting point to an ending point of a robot motion based on the shortest tentative motion path connecting the starting point and the ending point in the physical workspace 100. The determiner 21 performs a process of determining whether the robot 10 interferes with an obstacle on at least one of the multiple candidate motion paths obtained by the candidate obtainer 20. The path setter 22 performs a process of setting the motion path of the robot 10 based on the determination result from the determiner 21.

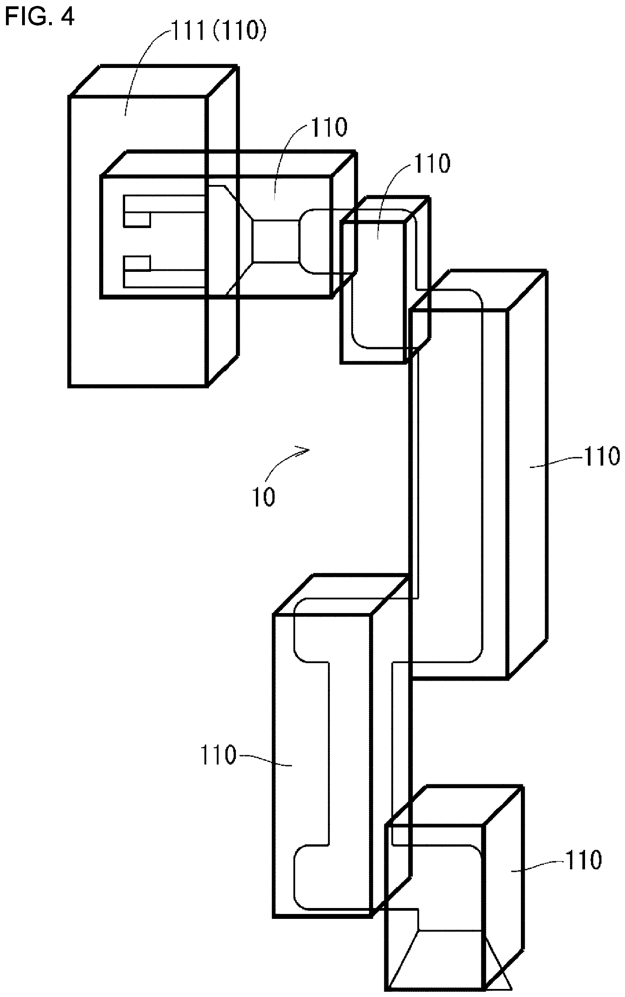

In an interference determination process performed by the determiner 21, the determiner 21 determines whether the robot 10 interferes with an obstacle on one candidate motion path and also determines, for example, whether the target object 50 held by the robot 10 interferes with an obstacle. As illustrated in FIG. 4, the shape of the robot 10 is approximated by, for example, multiple (e.g., five) rectangular prisms 110. The shape of the target object 50 is also approximated by, for example, a single rectangular prism 111.

In this example, the interference determination process is performed for the robot 10 including the target object 50 held by the robot 10. More specifically, in the interference determination process, the robot 10 is determined to interfere or not to interfere with an obstacle, with the target object 50 held by the robot 10 being treated as a part of the robot 10. Unless otherwise specified, the robot 10 hereafter refers to both the target object 50 held by the robot 10 and the robot 10. A simple robot 10 refers to the robot 10 excluding the target object 50. In other words, a simple robot 10 refers to the robot 10 without holding the target object 50. The rectangular prism 111 representing the shape of the target object 50 may be referred to as a rectangular prism 110. In the example in FIG. 4, the shape of the robot 10 is represented by six rectangular prisms 110. The robot information 31 in the storage 3 includes information indicating the positional relationship between the six rectangular prisms 110 representing the shape of the robot 10 and information indicating the shape of each of the six rectangular prisms 110. The controller 2 can identify the shape of the robot 10 based on the robot information 31.

The shape of the obstacle is approximated by, for example, at least one rectangular prism. When, for example, the obstacle includes multiple objects, the shape of the obstacle is approximated by multiple rectangular prisms. The obstacle information 32 stored in the storage 3 includes information indicating the position and the shape of at least one rectangular prism representing the shape of the obstacle. The controller 2 can identify the position and the shape of the obstacle based on the obstacle information 32.

Operation examples of the candidate obtainer 20, the determiner 21, and the path setter 22 will now be described in detail.

### Operation Examples of Candidate Obtainer, Determiner, and Path Setter

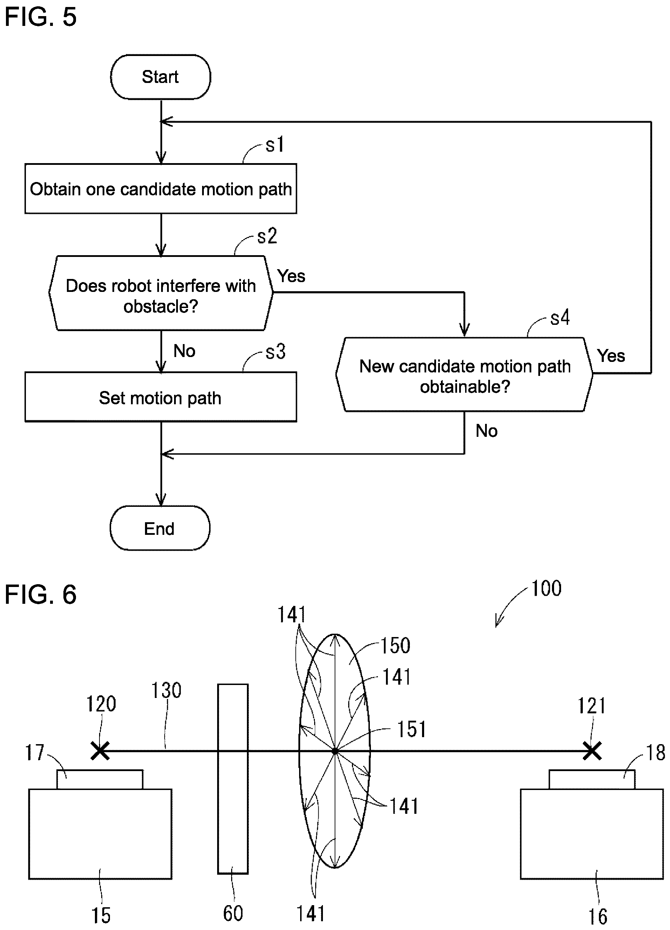

FIG. 5 is a flowchart of an example motion path setting process of setting the motion path of the robot 10 performed by the controller 2. The motion path setting process will be described briefly first, and then described in detail.

As illustrated in FIG. 5, in step s1, the candidate obtainer 20 obtains one candidate motion path. In step s2, the determiner 21 performs the interference determination process to determine whether the robot 10 interferes with an obstacle on the candidate motion path obtained in step s1. More specifically, the determiner 21 performs the interference determination process to determine whether the robot 10 interferes with an obstacle while moving along the candidate motion path obtained in step s1.

When the robot 10 is determined not to interfere with an obstacle in the interference determination process in step s2, step s3 is performed. In step s3, the path setter 22 sets the motion path of the robot 10 based on the candidate motion path obtained in step s1. For example, the path setter 22 directly sets the candidate motion path obtained in step s1 as the motion path. This ends the motion path setting process.

When the robot 10 is determined to interfere with an obstacle in the interference determination process in step s2, step s4 is performed. In step s4, the candidate obtainer 20 determines whether a new candidate motion path is obtainable. As described later, the candidate obtainer 20 can obtain a predetermined number T of candidate motion paths (T is an integer greater than or equal to 2). When the predetermined number T of obtainable candidate motion paths include a candidate motion path that has not been obtained, the candidate obtainer 20 determines that a new candidate motion path is obtainable. When all the predetermined number T of obtainable candidate motion paths have been already obtained, the candidate obtainer 20 determines that no new candidate motion path is obtainable.

When the determination result is affirmative in step s4, step s1 is performed again to obtain a new candidate motion path. In other words, one candidate motion path different from the previously obtained candidate motion paths is obtained. Step s2 is then performed. The controller 2 thereafter operates in the same manner as or in a similar manner to the above. When the determination result is negative in step s4, the motion path setting process ends.

Note that, in the above example, the candidate obtainer 20 obtains one candidate motion path, and then obtains another candidate motion path when the determiner 21 determines that the robot 10 interferes with an obstacle or another object on the obtained candidate motion path. However, the present disclosure is not limited to this. For example, the candidate obtainer 20 may obtain multiple candidate motion paths, and the determiner 21 may determine interference or no interference sequentially for the multiple candidate motion paths. Example Method for Obtaining Candidate Motion Path

The candidate obtainer 20 can obtain multiple candidate motion paths of, for example, a predetermined portion P of the robot 10 in the physical workspace 100. As illustrated in FIG. 3, the predetermined portion P is set at, for example, the distal end of the simple robot 10, or specifically, the distal end of the robot hand 12. In this case, a candidate motion path obtained by the candidate obtainer 20 may be a candidate motion path of the distal end of the simple robot 10. In the example in FIG. 3, the predetermined portion P is set at, for example, an intermediate point on the movement axis 106 between the two fingers of the robot hand 12.

FIG. 6 is a schematic diagram describing an operation example of the candidate obtainer 20. As illustrated in FIG. 6, the candidate obtainer 20 can obtain multiple candidate motion paths from a starting point 120 to an ending point 121 of the robot motion in the physical workspace 100 based on a shortest tentative motion path 130 connecting the starting point 120 and the ending point 121. The tentative motion path 130 is indicated by a line segment connecting the starting point 120 and the ending point 121. FIG. 6 schematically illustrates an example obstacle 60 located in the physical workspace 100.

The starting point 120 of the robot motion in the physical workspace 100 represents, for example, the position of the robot 10 at the time when the robot 10 holding the target object 50 starts a transfer motion to transfer the target object 50 to the tray 18. The starting point 120 represents, for example, the position of the predetermined portion P of the robot 10 at the time when the robot 10 starts the transfer motion. The ending point 121 of the robot motion in the physical workspace 100 represents, for example, the position of the robot 10 at the time when the robot 10 ends the transfer motion. The ending point 121 represents, for example, the position of the predetermined portion P of the robot 10 at the time when the robot 10 ends the transfer motion. The line connecting the starting point 120 and the ending point 121 represents the positional change of the predetermined portion P of the robot 10 from the start to the end of the transfer motion. In other words, the line connecting the starting point 120 and the ending point 121 represents the positional trajectory of the predetermined portion P of the robot 10 from the start to the end of the transfer motion. In step s3 in FIG. 5, for example, one candidate motion path 135 connecting the starting point 120 and the ending point 121 is set as the motion path of the robot 10. The motion path of the robot 10 set by the path setter 22 is represented as the positional change (in other words, the positional trajectory) of the predetermined portion P of the robot 10.

The starting point 120 may be, for example, the point at which the transfer motion starts after completion of a holding motion to hold the target object 50 in the robot motion. The starting point 120 may be, for example, the point at which a program for controlling the holding motion is switched to a program for controlling the transfer motion. The starting point 120 is set at, for example, a position immediately above the tray 17 and slightly spaced from the tray 17. The ending point 121 may be, for example, the point at which the program for controlling the transfer motion is switched to a program for controlling a release motion. The ending point 121 may be, for example, the point at which the release motion to release the target object 50 starts after completion of the transfer motion in the robot motion. The ending point 121 is set at, for example, a position immediately above the tray 18 and slightly spaced from the tray 18. Note that the starting point 120 may be set in the tray 17. The ending point 121 may be set in the tray 18.

The tentative motion path 130 may be the shortest motion path of the predetermined portion P of the robot 10 from the starting point 120 to the ending point 121. The candidate obtainer 20 can obtain multiple candidate motion paths by, for example, shifting the tentative motion path 130, or in other words, shifting the line segment indicating the tentative motion path 130. The candidate obtainer 20 can obtain multiple candidate motion paths by, for example, parallelly shifting the tentative motion path 130. The candidate obtainer 20 can obtain multiple candidate motion paths by, for example, parallelly shifting the tentative motion path 130 in a first direction 141 orthogonal to the tentative motion path 130 (in other words, in the first direction 141 orthogonal to the line segment indicating the tentative motion path 130). In this example, multiple first directions 141 orthogonal to the tentative motion path 130 are set. The candidate obtainer 20 parallelly shifts the tentative motion path 130 in the respective first directions 141 to obtain multiple candidate motion paths. Each of the tentative motion path 130, the candidate motion paths, and the motion path set by the path setter 22 is represented by, for example, a collection of multiple points (e.g., several tens of points) in the physical workspace 100.

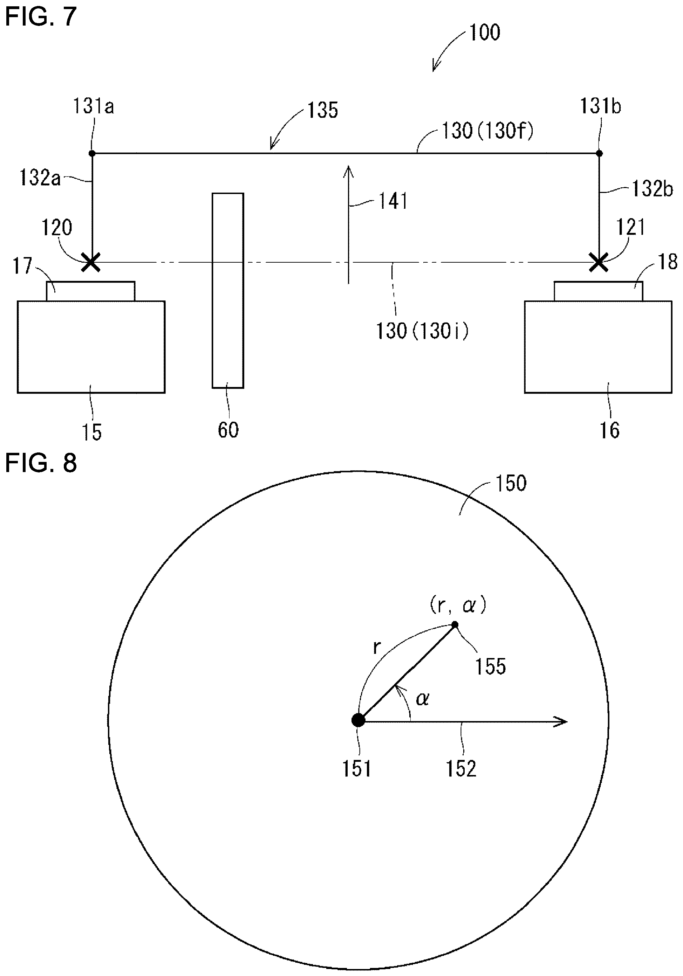

To obtain a candidate motion path by shifting the tentative motion path 130, the candidate obtainer 20 connects, with a linear path 132a, the starting point 120 to an end 131a of the tentative motion path 130 that has been shifted (also referred to as a shifted tentative motion path 130f) as illustrated in FIG. 7. The end 131a is one of two ends 131a and 131b of the shifted tentative motion path 130 corresponding to the starting point 120 on the tentative motion path 130 at its initial position. The initial position of the tentative motion path 130 refers to the position of the tentative motion path 130 before being shifted, or in other words, the position of the tentative motion path 130 connecting the starting point 120 and the ending point 121. The candidate obtainer 20 also connects the ending point 121 to the end 131b with a linear path 132b. The end 131b is one of the two ends 131a and 131b corresponding to the ending point 121 on the tentative motion path 130 at its initial position. Each of the linear paths 132a and 132b is indicated by a line segment. The candidate obtainer 20 obtains, as one candidate motion path 135, a path from the starting point 120 to the ending point 121 including the shifted tentative motion path 130f, the linear path 132a, and the linear path 132b. More specifically, the candidate obtainer 20 obtains, as one candidate motion path 135, a path including the shifted tentative motion path 130f with one end of the shifted tentative motion path 130f connected to the starting point 120 and the other end of the shifted tentative motion path 130f connected to the ending point 121. One candidate motion path 135 is represented by the line connecting the starting point 120 and the ending point 121. In FIG. 7, the two-dot-dash line indicates the tentative motion path 130 before being shifted, or in other words, the tentative motion path 130 connecting the starting point 120 and the ending point 121. The tentative motion path 130 at the initial position (initial-position tentative motion path 130) may be hereafter referred to as an initial-position tentative motion path 130i.

In this example, as illustrated in FIG. 6, an imaginary plane 150 orthogonal to the tentative motion path 130 is set. In the example in FIG. 6, the outline of the plane 150 is circular, but may be square or in any other shape. The candidate obtainer 20 obtains one candidate motion path 135 by parallelly shifting the tentative motion path 130 in the first direction 141 to cause the tentative motion path 130 to pass through a waypoint that is set on the plane 150, as in the example in FIG. 7. To obtain a new candidate motion path 135, the candidate obtainer 20 changes the position of the waypoint on the plane 150. The candidate obtainer 20 then parallelly shifts the tentative motion path 130 in the first direction 141 to cause the tentative motion path 130 to pass through the waypoint at the changed position to obtain a new candidate motion path 135.

FIG. 8 is a schematic diagram describing an example method for setting the position of a waypoint 155 on the plane 150. The position of the waypoint 155 on the plane 150 is expressed in, for example, polar coordinates. As illustrated in FIG. 8, a starting line 152 extending from an intersection 151 between the plane 150 and the tentative motion path 130 is set on the plane 150. The starting line 152 is perpendicular to the tentative motion path 130. The position of the waypoint 155 on the plane 150 is represented by, for example, a pair (r, α), where r is the distance from the intersection 151 to the waypoint 155, and α is the argument from the starting line 152 to the waypoint 155. The distance r and the argument α are variables.

The candidate obtainer 20 can change the position (r, α) of the waypoint 155 by changing the combination of setting values for the distance r and the argument α. With the position (r, α) of the waypoint 155 changed, the candidate motion path 135 to be obtained is changed. Thus, the candidate obtainer 20 can obtain multiple candidate motion paths 135 by changing the combination of the setting values for the distance r and the argument α.

The first direction 141 in which the tentative motion path 130 is parallelly shifted is determined by the argument α. The first direction 141 in which the tentative motion path 130 is parallelly shifted has the argument α from the starting line 152 to the first direction 141. The tentative motion path 130 is shifted in the first direction 141 with the argument α from the starting line 152 to the first direction 141. The distance by which the tentative motion path 130 is shifted is determined by the distance r. The tentative motion path 130 is parallelly shifted by the distance r.

For example, the candidate obtainer 20 changes the value of the argument α in steps of a predetermined angle that is greater than or equal to 0 degrees and less than 360 degrees. The predetermined angle may be 10 degrees, 1 degree, or any other degrees. The predetermined angle may be set as appropriate for, for example, the length of the shortest one of the sides of the six rectangular prisms 110 representing the shape of the robot 10.

The candidate obtainer 20 changes, for example, the value of the distance r in steps of a predetermined distance within a predetermined range. The lower limit of the predetermined range is set to, for example, greater than 0. The upper limit of the predetermined range may be set as appropriate for, for example, the size of the physical workspace 100. The upper limit of the predetermined range may instead be set as appropriate for, for example, the length of the longest one of the sides of at least one rectangular prism representing the shape of the obstacle 60. The predetermined distance may be set as appropriate for, for example, the length of the shortest one of the sides of the six rectangular prisms 110 representing the shape of the robot 10.

In this example, U1 setting values (U1 is an integer greater than or equal to 2) are prepared as the setting values for the argument α, and U2 setting values (U2 is an integer greater than or equal to 2) are prepared as the setting values for the distance r. In this case, (U1 × U2) combinations of the setting values for the distance r and the argument α are settable. The candidate obtainer 20 can thus set (U1 × U2) waypoints 155 on the plane 150. The candidate obtainer 20 can thus obtain (U1 × U2) candidate motion paths. In this example, the candidate obtainer 20 can obtain a predetermined number T of candidate motion paths, where T = U1 × U2.

In the example described below, the candidate obtainer 20 can set a total of S waypoints 155 on the plane 150 (S is an integer greater than or equal to 2). In this example, S = T = U1 × U2.

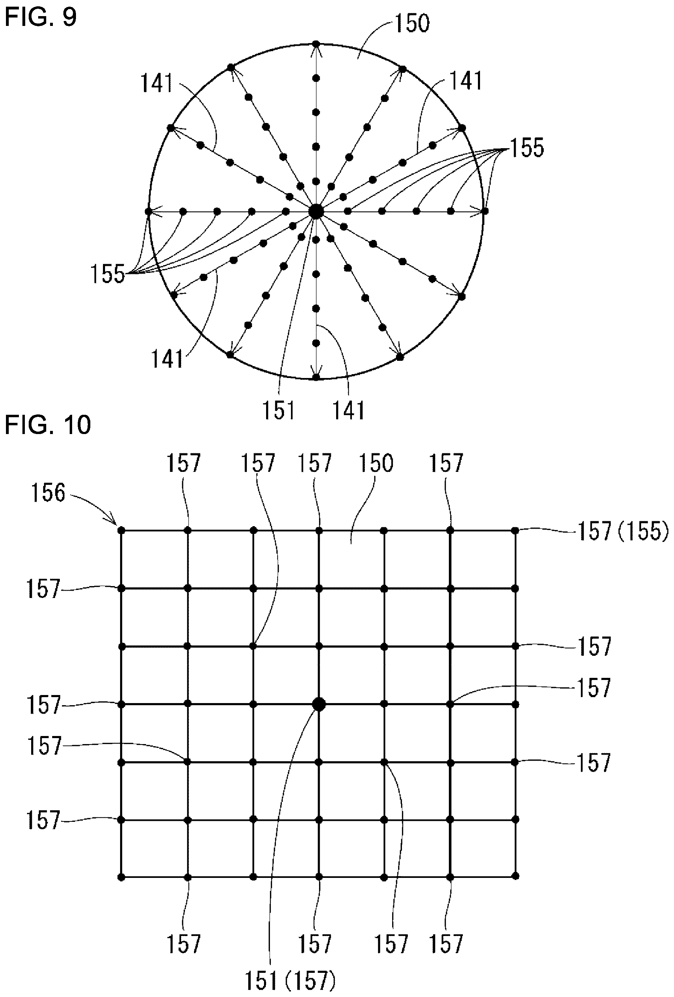

FIG. 9 is a schematic diagram of (U1 × U2) waypoints 155 in an example. In the example in FIG. 9, U1 = 12, and U2 = 5. In the example in FIG. 9, the setting values prepared for the argument α are 0, 30, 60, 90, 120, 150, 180, 210, 240, 270, 300, and 330 degrees.

In step s1 in the motion path setting process, the candidate obtainer 20 first sets the combination of the setting values for the distance r and the argument α to one of the S combinations that has not been set. The candidate obtainer 20 then parallelly shifts the tentative motion path 130 in the first direction 141 to cause the tentative motion path 130 to pass through a waypoint 155 at the position determined by the combination of the setting values for the distance r and the argument α. In other words, the candidate obtainer 20 parallelly shifts the tentative motion path 130 in the first direction 141 to cause the tentative motion path 130 to pass through one of the S settable waypoints 155 that is unused, or specifically, a waypoint 155 through which no tentative motion path 130 has passed. Then, as in the example in FIG. 7, the candidate obtainer 20 connects the end 131a of the shifted tentative motion path 130f to the starting point 120 with the linear path 132a, and connects the end 131b of the shifted tentative motion path 130f to the ending point 121 with the linear path 132b. The candidate obtainer 20 obtains, as one candidate motion path 135, a path from the starting point 120 to the ending point 121 including the shifted tentative motion path 130f, the linear path 132a, and the linear path 132b. Thus, in step s1, one of the predetermined number T of candidate motion paths 135 that has not been obtained is obtained as a new candidate motion path 135.

**In** step s4 in the motion path setting process, when all the (U1 × U2) combinations of the setting values for the distance r and the argument α have been set, the candidate obtainer 20 determines that all the predetermined number T of candidate motion paths have been already obtained and determines that no new candidate motion path 135 is obtainable. **In** other words, when all the S settable waypoints 155 are used, the candidate obtainer 20 determines that all the predetermined number T of candidate motion paths have been already obtained and determines that no new candidate motion path 135 is obtainable. When the (U1 × U2) combinations of the setting values for the distance r and the argument α include a combination that has not been set, the candidate obtainer 20 determines that a new candidate motion path 135 is obtainable. In other words, when the S settable waypoints 155 include a waypoint 155 that is unused, the candidate obtainer 20 determines that a new candidate motion path 135 is obtainable.

Note that the initial-position tentative motion path 130, or specifically, the shortest tentative motion path 130 connecting the starting point 120 and the ending point 121 may be used as one candidate motion path 135. The initial-position tentative motion path 130 may also be referred to as the tentative motion path 130 passing through the waypoint 155 when r = 0.

The position of the waypoint 155 is expressed in polar coordinates in the above example, but may be set in any other manner. FIG. 10 is a schematic diagram describing another example method for setting the position of the waypoint 155.

As illustrated in FIG. 10, for example, the candidate obtainer 20 sets a grid 156 (also referred to as grid lines 156) on a square plane 150 to divide the plane 150 in a grid pattern. For example, the grid 156 is set on the plane 150 to have the center aligned with the intersection 151 between the plane 150 and the tentative motion path 130.

The candidate obtainer 20 sequentially sets multiple grid points 157 on the grid 156 as the waypoints 155. The multiple grid points 157 on the grid 156 serve as multiple waypoints 155 that are settable on the plane 150. The multiple grid points 157 may include the intersection 151 as illustrated in FIG. 10, or may not include the intersection 151. The candidate obtainer 20 can change the candidate motion path 135 used in step s2 by changing the grid point 157 to be set as a waypoint 155. The candidate obtainer 20 can obtain as many candidate motion paths as the multiple grid points 157. When the multiple grid points 157 include the intersection 151, the initial-position tentative motion path 130i is used as one candidate motion path 135.

In step s1 in the motion path setting process, the candidate obtainer 20 first sets, as a waypoint 155, one of the multiple grid points 157 that has not been set as a waypoint 155. The candidate obtainer 20 then parallelly shifts the tentative motion path 130 in the first direction 141 to cause the tentative motion path 130 to pass through the set waypoint 155. As in the example in FIG. 7, the candidate obtainer 20 obtains, as one candidate motion path 135, a path including the shifted tentative motion path 130f with the respective two ends of the shifted tentative motion path 130f connected to the starting point 120 and the ending point 121. Thus, in step s1, one of the predetermined number T of candidate motion paths 135 that has not been obtained is obtained as a new candidate motion path 135.

In step s4 in the motion path setting process, when all the multiple grid points 157 have been set as the waypoints 155 (in other words, when all the S settable waypoints 155 are used), the candidate obtainer 20 determines that all the predetermined number T of candidate motion paths have been already obtained and determines that no new candidate motion path is obtainable. When the multiple grid points 157 include a grid point 157 that has not been set as a waypoint 155 (in other words, when the S settable waypoints 155 include a waypoint 155 that is unused), the candidate obtainer 20 determines that a new candidate motion path is obtainable.

### Example Interference Determination Process

In step s2, the determiner 21 determines whether the robot 10 interferes with the obstacle 60 when the predetermined portion P of the robot 10 is at a position (also referred to as a focused position) on the candidate motion path 135. The focused position on the candidate motion path 135 is the position of a point included in the multiple points representing the candidate motion path 135. In this example, the posture of the robot 10 is determined uniquely based on the position of the predetermined portion P of the robot 10. The robot information 31 in the storage 3 includes information for identifying the posture of the robot 10 corresponding to each position of the predetermined portion P of the robot 10 in the physical workspace 100. The determiner 21 identifies, based on the robot information 31, the posture and the shape of the robot 10 with the predetermined portion P of the robot 10 placed at the focused position on the candidate motion path 135. The determiner 21 also identifies the position and the shape of the obstacle 60 based on the obstacle information 32 in the storage 3. The determiner 21 determines whether the robot 10 interferes with the obstacle 60 when the predetermined portion P of the robot 10 is at the focused position on the candidate motion path 135 based on the posture and the shape of the robot 10 with the predetermined portion P at the focused position on the candidate motion path 135 and based on the position and the shape of the obstacle 60.

The determiner 21 determines whether the robot 10 interferes with the obstacle 60 when the predetermined portion P of the robot 10 is at the focused position, with each position on the candidate motion path 135 between the starting point 120 and the ending point 121 (in other words, each of the positions of the multiple points representing the candidate motion path 135) being sequentially set as the focused position. When the determiner 21 determines that the robot 10 does not interfere with the obstacle 60 at any position on the candidate motion path 135 (in other words, at any of the positions of the multiple points representing the candidate motion path 135), the determiner 21 determines that the robot 10 does not interfere with the obstacle on the candidate motion path 135 (No in step s2). When the determiner 21 determines that the robot 10 interferes with the obstacle 60 with the predetermined portion P placed at any position on the candidate motion path 135 (in other words, with the predetermined portion P placed at the position of any of the multiple points representing the candidate motion path 135), the determiner 21 determines that the robot 10 interferes with the obstacle on the candidate motion path 135 (Yes in step s2).

Note that the predetermined portion P of the robot 10 may not be placed at the focused position on the candidate motion path 135 under a limitation associated with the performance of the robot 10. For example, when the focused position on the candidate motion path 135 is outside the motion range of the robot 10 in the physical workspace 100, the predetermined portion P of the robot 10 cannot be placed at the focused position. The motion range of the robot 10 refers to the range reachable by the distal end of the robot hand 12 when the arm 11 extending to its maximum length turns. When the focused position on the candidate motion path 135 is within an inaccessible area, the predetermined portion P of the robot 10 cannot be placed at the focused position. The inaccessible area is an area within the motion range but inaccessible to the distal end of the robot hand 12. The inaccessible area includes, for example, a basal portion of the arm 11. The robot 10 in a specific posture may be restricted from moving in a specific direction. Such a specific posture is also referred to as a singular point. With the singular point of the posture of the robot 10, the predetermined portion P of the robot 10 may not be placed at the focused position on the candidate motion path 135.

In this manner, when the predetermined portion P of the robot 10 cannot be placed at the focused position on the candidate motion path 135, the candidate motion path 135 cannot be used to set the motion path of the robot 10. In other words, the candidate motion path 135 including a point at which the predetermined portion P of the robot 10 cannot be placed (also referred to as a specific candidate motion path 135) cannot be used to set the motion path of the robot 10. Thus, the determiner 21 may perform the interference determination process for candidate motion paths 135 other than the specific candidate motion path 135. In this case, the specific candidate motion path 135 is not used to set the motion path. The robot information 31 includes information for identifying the position at which the predetermined portion P of the robot 10 cannot be placed. The determiner 21 uses this information to determine whether a candidate motion path 135 is the specific candidate motion path 135.

A candidate motion path on which the robot 10 is determined not to interfere with the obstacle 60 may be hereafter referred to as a candidate non-interference path. A candidate motion path on which the robot 10 is determined to interfere with the obstacle 60 may be referred to as a candidate interference path.

Note that, when a predetermined number T of candidate motion paths are obtained, for example, the determiner 21 may perform the interference determination process for the predetermined number T of candidate motion paths in order of decreasing proximity to the initial-position tentative motion path 130. After a candidate non-interference path is first detected, the determiner 21 may not perform the interference determination process for the rest of the candidate non-interference paths. In this case, the determiner 21 may perform the interference determination process for some of the predetermined number T of candidate motion paths obtained by the candidate obtainer 20. The path setter 22 may set, as the motion path, the candidate non-interference path detected first by the determiner 21.

As described above, in this example, multiple candidate motion paths are obtained based on the shortest tentative motion path 130 connecting the starting point 120 and the ending point 121 of the robot motion. Thus, the motion path setting device 1 can efficiently set the motion path of the robot 10.

In this example, the candidate obtainer 20 can obtain multiple candidate motion paths 135 by shifting the tentative motion path 130. This allows the multiple candidate motion paths 135 to be obtained with a relatively simple process performed for the tentative motion path 130.

After the path setter 22 sets the motion path of the robot 10 as described above, the controller 2 sets the motion of the robot 10 on the motion path that has been set (also referred to as a set motion path) based on the set motion path. More specifically, the controller 2 sets the motion of each of the joints of the arm 11 on the set motion path.

The set motion path is represented by multiple points each referred to as a set path point. The time elapsed from the start of the motion of the robot 10 is referred to as a motion elapsed time. The controller 2 first calculates, for each of the set path points on the set motion path, the robot posture with the predetermined portion P of the robot 10 placed at the set path point. More specifically, the controller 2 calculates, for each of the set path points on the set motion path, the rotation angle θ of each of the joints of the arm 11 with the predetermined portion P of the robot 10 placed at the set path point. The calculated angle is referred to as a set rotation angle θ.

The set rotation angle θ of a joint of the arm 11 with the predetermined portion P of the robot 10 placed at a set path point is hereafter referred to as a set rotation angle θ of the joint at the set path point. A set path point that is focused on is referred to as a focused set path point. A joint of the robot 10 that is focused on is referred to as a focused joint.

The controller 2 determines the motion elapsed time corresponding to the set rotation angle θ of the focused joint at the focused set path point. The motion elapsed time corresponding to the set rotation angle θ of the focused joint refers to the motion elapsed time for which the focused joint maintains the set rotation angle θ. The set rotation angle θ of the focused joint corresponding to a motion elapsed time on the set motion path refers to the rotation angle θ of the focused joint during the motion elapsed time. The controller 2 determines, for each of the multiple set path points representing the set motion path, the motion elapsed time corresponding to the set rotation angle θ of the focused joint at the set path point. This can generally set the rotation angle θ of the focused joint and the timing at which the focused joint has the rotation angle θ when the robot 10 moves along the set motion path. In other words, the general motion of the focused joint on the set motion path can be set.

The storage 3 stores the upper limit of the rotational speed and the upper limit of the rotational acceleration for each of the joints of the arm 11. The controller 2 sets the general motion of the focused joint on the set motion path to cause the focused joint to have the rotational speed and the rotational acceleration not exceeding their upper limits. The controller 2 determines, for each of the set path points on the set motion path, the motion elapsed time corresponding to the set rotation angle θ of the focused joint at the set path point based on the upper limit of the rotational speed and the upper limit of the rotational acceleration in the storage 3. In other words, the controller 2 sets the general motion of the focused joint on the set motion path based on the upper limit of the rotational speed and the upper limit of the rotational acceleration. In the same or similar manner, the controller 2 sets the general motion of each of the joints of the arm 11 on the set motion path. This produces multiple combinations of the motion elapsed time and the set rotation angle θ for each of the joints of the arm 11.

The controller 2 defines a two-dimensional orthogonal coordinate system (referred to as a specific coordinate system) with the horizontal axis indicating the motion elapsed time and the vertical axis indicating the set rotation angle θ corresponding to the motion elapsed time. The controller 2 plots all combinations of the motion elapsed time and the set rotation angle θ for the focused joint in the specific coordinate system. This sets multiple points representing changes in the set rotation angle θ of the focused joint corresponding to the motion elapsed time in the specific coordinate system. Each of the multiple points is referred to as a provisional motion point. The number of provisional motion points set in the specific coordinate system corresponds to the number of set path points representing the set motion path. The number of provisional motion points is hereafter denoted by N1 (N1 is an integer greater than or equal to 2).

The controller 2 then sets an interpolation curve interpolating the N1 provisional motion points for the focused joint in the specific coordinate system. The interpolation curve may be, for example, a spline curve or any other curve. The controller 2 sets N2 points on the set interpolation curve. Each of the N2 points is referred to as a final motion point. N2 is an integer greater than N1 and is, for example, several thousands. The controller 2 sets, for example, several thousands of final motion points on the interpolation curve. A combination of the motion elapsed time and the set rotation angle θ at a final motion point is hereafter referred to as motion point data indicating the final motion point.

The controller 2 generates, based on the N2 final motion points, joint set-motion data indicating the set motion of the focused joint. The joint set-motion data includes N2 pieces of motion point data indicating the respective N2 final motion points. The controller 2 generates joint set-motion data for each of the joints in the same manner as or in a similar manner to the above. The controller 2 uses the joint set-motion data about the multiple joints of the arm 11 as the robot set-motion data indicating the set motion of the robot 10 on the set motion path. The robot set-motion data includes multiple pieces of joint set-motion data indicating the respective motions of the multiple joints.

In this manner, the set motion path is represented by the N1 points that are fewer than the N2 pieces of motion point data directly used to control the motion of the robot 10 in this example. This can reduce, for example, the computation in the above interference determination process.

### Other Operation Example of Candidate Obtainer

In the example in FIGs. 9 and 10, the shift direction of the tentative motion path 130 is set across a range of 360 degrees about the intersection 151. However, the candidate obtainer 20 may limit, for example, the shift direction of the tentative motion path 130.

For example, the user inputs, into the motion path setting device 1 through the input unit 5, no-obtainment information indicating that a candidate motion path passing through a specific area is not to be obtained. For example, the obstacle 60 may be always located below the initial-position tentative motion path 130i. In this case, the motion path of the robot 10 cannot be easily set below the initial-position tentative motion path 130i. The user thus inputs, into the motion path setting device 1 through the input unit 5, no-obtainment information indicating that a candidate motion path passing, for example, below the initial-position tentative motion path 130i is not to be obtained. The candidate obtainer 20 limits the shift range of the tentative motion path 130 based on the no-obtainment information input by the user. When the no-obtainment information indicates that a candidate motion path passing below the initial-position tentative motion path 130i is not to be obtained, for example, the candidate obtainer 20 does not set a waypoint 155 below the initial-position tentative motion path 130i. For example, in FIG. 10, the area below the intersection 151 may be located below the initial-position tentative motion path 130i. In this case, the candidate obtainer 20 sets no grid point 157 located below the intersection 151 as a waypoint 155 in FIG. 10. The tentative motion path 130 is thus not shifted below its initial position to obtain candidate motion paths. Thus, a candidate motion path passing below the initial-position tentative motion path 130 is not obtained.

The candidate obtainer 20 may parallelly shift the tentative motion path 130 in a second direction 142 parallel to the tentative motion path 130 in addition to the first direction 141 to obtain multiple candidate motion paths.

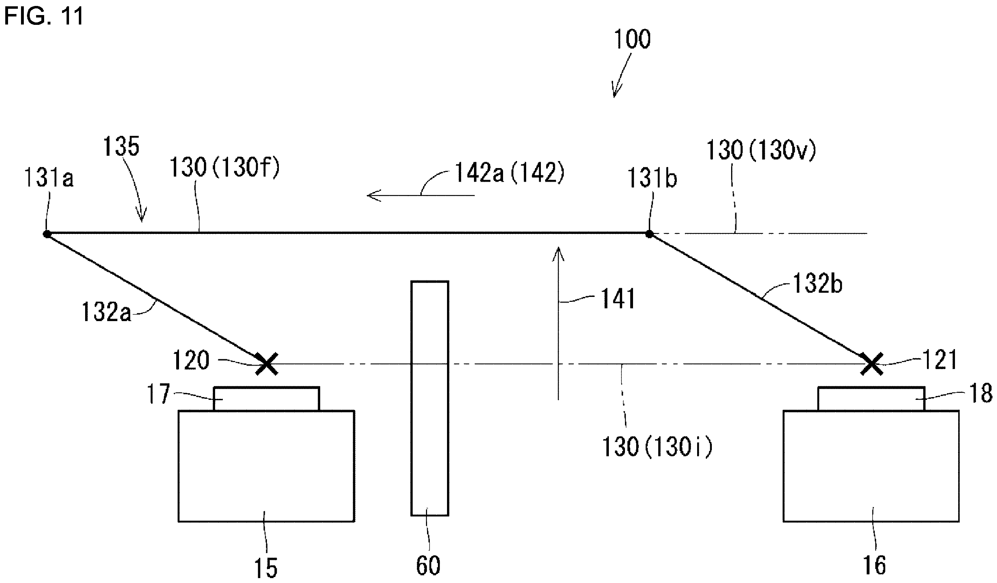

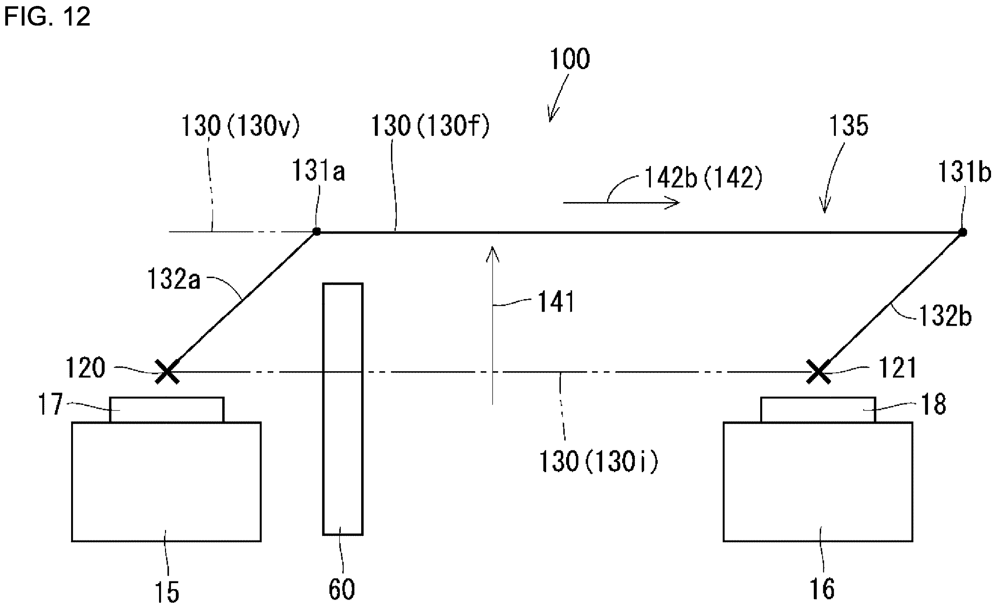

The second direction 142 parallel to the tentative motion path 130 includes two directions, or specifically, a second direction 142a from the ending point 121 toward the starting point 120 (refer to FIG. 11 described later) and a second direction 142b from the starting point 120 toward the ending point 121 (refer to FIG. 12 described later).

For example, the candidate obtainer 20 may parallelly shift the tentative motion path 130 in the first direction 141, the second direction 142a, and the second direction 142b to obtain multiple candidate motion paths. In this case, the candidate obtainer 20 may obtain one candidate motion path 135 in step s1 by parallelly shifting the tentative motion path 130 in the first direction 141 alone (also referred to as a first obtaining method using parallel shifting), by parallelly shifting the tentative motion path 130 in the first direction 141 and in the second direction 142a (also referred to as a second obtaining method using parallel shifting), or by parallelly shifting the tentative motion path 130 in the first direction 141 and in the second direction 142b (also referred to as a third obtaining method using parallel shifting). The candidate obtainer 20 can obtain a predetermined number T of candidate motion paths 135 by parallelly shifting the tentative motion path 130 in the first direction 141, the second direction 142a, or the second direction 142b with the first obtaining method, the second obtaining method, or the third obtaining method using parallel shifting.

With the first obtaining method using parallel shifting, one candidate motion path 135 is obtained as in the example in FIG. 7. With the second obtaining method using parallel shifting, for example, the candidate obtainer 20 first parallelly shifts the tentative motion path 130 in the first direction 141 as in FIG. 7. At this point in time, the shift of the tentative motion path 130 is incomplete. The candidate obtainer 20 then further parallelly shifts, in the second direction 142a, the tentative motion path 130 that has been parallelly shifted in the first direction 141 (also referred to as a tentative motion path 130v shifted in the first direction), as illustrated in FIG. 11. This completes the shift of the tentative motion path 130. The candidate obtainer 20 then connects the end 131a of the shifted tentative motion path 130f to the starting point 120 with the linear path 132a, and connects the end 131b of the shifted tentative motion path 130f to the ending point 121 with the linear path 132b. The candidate obtainer 20 obtains, as one candidate motion path 135, a path including the shifted tentative motion path 130f, the linear path 132a, and the linear path 132b.

With the third obtaining method using parallel shifting, for example, the candidate obtainer 20 first parallelly shifts the tentative motion path 130 in the first direction 141 as in FIG. 7. The candidate obtainer 20 then further parallelly shifts, in the second direction 142b, the tentative motion path 130v shifted in the first direction, as illustrated in FIG. 12. This completes the shift of the tentative motion path 130. The candidate obtainer 20 then connects the end 131a of the shifted tentative motion path 130f to the starting point 120 with the linear path 132a, and connects the end 131b of the shifted tentative motion path 130f to the ending point 121 with the linear path 132b. The candidate obtainer 20 obtains, as one candidate motion path 135, a path including the shifted tentative motion path 130f, the linear path 132a, and the linear path 132b.

Note that, with the second obtaining method using parallel shifting, the candidate obtainer 20 may parallelly shift the tentative motion path 130 in the second direction 142a and then in the first direction 141. With the third obtaining method using parallel shifting, the candidate obtainer 20 may parallelly shift the tentative motion path 130 in the second direction 142b and then in the first direction 141.

With the second obtaining method using parallel shifting, the candidate obtainer 20 can change the candidate motion path to be obtained by changing the shift amount of the tentative motion path 130 in the second direction 142a. With the third obtaining method using parallel shifting, the candidate obtainer 20 can change the candidate motion path to be obtained by changing the shift amount of the tentative motion path 130 in the second direction 141b. For example, V1 setting values (V1 is an integer greater than or equal to 1) are prepared for the shift amount of the tentative motion path 130 in the second direction 142a. For example, V2 setting values (V2 is an integer greater than or equal to 1) are prepared for the shift amount of the tentative motion path 130 in the second direction 141b. The value V1 and the value V2 may be the same or different.

A waypoint 155 that is focused on (in other words, a waypoint 155 that is described) is hereafter referred to as a focused waypoint 155. A tentative motion path 130 parallelly shifted in the first direction 141 to pass through the focused waypoint 155 is hereafter referred to as a focused tentative motion path 130v shifted in the first direction.

With the first obtaining method using parallel shifting, the candidate obtainer 20 can obtain one candidate motion path 135 using the focused tentative motion path 130v shifted in the first direction (refer to FIG. 7). With the second obtaining method using parallel shifting, the candidate obtainer 20 can obtain one candidate motion path 135 using the focused tentative motion path 130v shifted in the first direction and then parallelly shifted in the second direction 142a by a setting value (refer to FIG. 11). With the V1 setting values being prepared for the shift amount of the tentative motion path 130 in the second direction 142a, the candidate obtainer 20 can obtain V1 candidate motion paths 135 by parallelly shifting the focused tentative motion path 130v in the first direction and then in the second direction 142a by the respective setting values. In the same or similar manner, with the second obtaining method using parallel shifting, the candidate obtainer 20 can obtain V2 candidate motion paths 135 by parallelly shifting the focused tentative motion path 130v in the first direction and then in the second direction 141b by the respective setting values.

In this manner, the candidate obtainer 20 can obtain (1 + V1 + V2) candidate motion paths 135 for each of the focused waypoints 155. The candidate obtainer 20 can thus obtain a total of S × (1 + V1 + V2) candidate motion paths 135. In this case, the candidate obtainer 20 can obtain a predetermined number T of candidate motion paths 135, where T = S × (1 + V1 + V2).

In step s1 in the motion path setting process, the candidate obtainer 20 obtains one of the obtainable S × (1 + V1 + V2) candidate motion paths 135 that has not been obtained. In step s4 in the motion path setting process, when the obtainable S × (1 + V1 + V2) candidate motion paths 135 include a candidate motion path 135 that has not been obtained, the candidate obtainer 20 determines that a new candidate motion path 135 is obtainable. When all the obtainable S × (1 + V1 + V2) candidate motion paths 135 have been already obtained, the candidate obtainer 20 determines that no new candidate motion path 135 is obtainable.

Note that the candidate obtainer 20 may not parallelly shift the tentative motion path 130 in the second direction 142a. In this case, T = S × (1 + V2), and the candidate obtainer 20 can obtain a total of S × (1 + V2) candidate motion paths 135. The candidate obtainer 20 may not parallelly shift the tentative motion path 130 in the second direction **142b. In** this case, T = S × (1 + V1), and the candidate obtainer 20 can obtain a total of S × (1 + V1) candidate motion paths 135.

In this manner, the candidate obtainer 20 can obtain multiple candidate motion paths 135 by parallelly shifting the tentative motion path 130 in the first direction 141 and in the second direction 142. This allows a variety of candidate motion paths 135 to be obtained. The motion path of the robot 10 can thus be set appropriately.

In the above examples, the tentative motion path 130 is parallelly shifted to obtain candidate motion paths 135. However, the tentative motion path 130 may be rotationally shifted. In other words, the candidate obtainer 20 may obtain multiple candidate motion paths 135 by rotationally shifting the tentative motion path 130. For example, the candidate obtainer 20 may obtain multiple candidate motion paths 135 by rotationally shifting the tentative motion path 130 about a first rotation axis 161 and a second rotation axis 162.

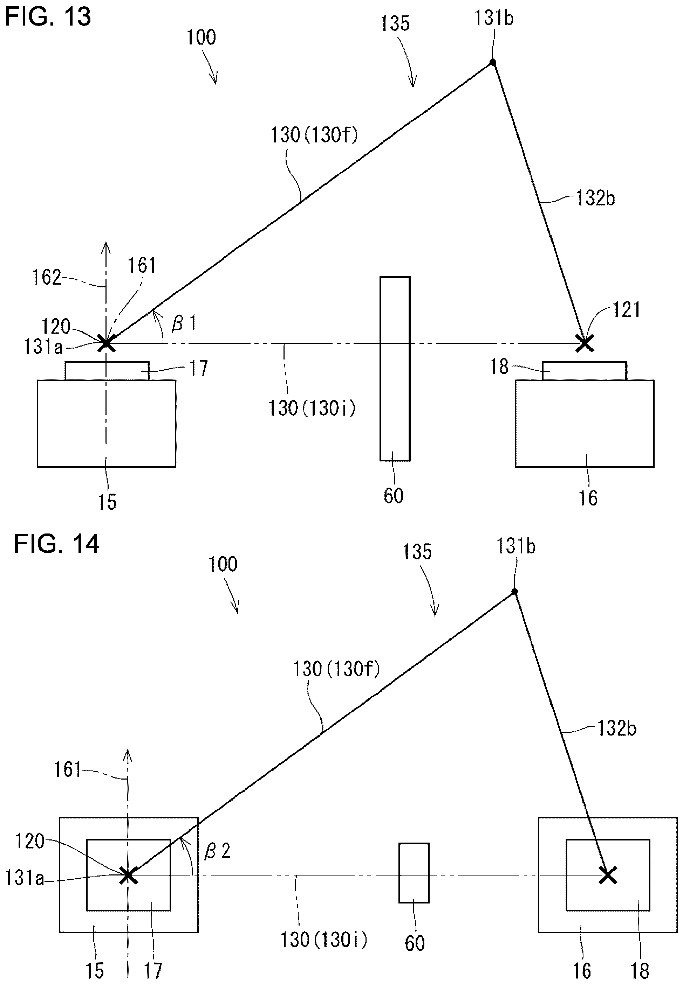

FIG. 13 is a schematic diagram of the tentative motion path 130 being rotationally shifted about the first rotation axis 161 in an example. FIG. 14 is a schematic diagram of the tentative motion path 130 being rotationally shifted about the second rotation axis 162 in an example. FIG. 13 illustrates an example of the physical workspace 100 viewed in the lateral direction of the worktables 15 and 16. FIG. 14 illustrates an example of the physical workspace 100 viewed from above the worktables 15 and 16.

As illustrated in FIGs. 13 and 14, the first rotation axis 161 is, for example, perpendicular to the initial-position tentative motion path 130 and parallel to a floor on which the worktables 15 and 16 are installed. The second rotation axis 162 is, for example, perpendicular to the initial-position tentative motion path 130 and orthogonal to the first rotation axis 161. The first rotation axis 161 and the second rotation axis 162 pass through, for example, the starting point 120.

In this example, the first rotation axis 161 passes through the starting point 120. Thus, when the tentative motion path 130 is rotated about the first rotation axis 161, the end of the tentative motion path 130 at the ending point 121 is displaced and the end of the tentative motion path 130 at the starting point 120 is fixed. The second rotation axis 162 passes through the starting point 120. Thus, when the tentative motion path 130 is rotated about the second rotation axis 162, the end of the tentative motion path 130 at the ending point 121 is displaced and the end of the tentative motion path 130 at the starting point 120 is fixed.

The candidate obtainer 20 can change the candidate motion path 135 to be obtained by changing a rotation angle β1 of the tentative motion path 130 about the first rotation axis 161. The candidate obtainer 20 can change the candidate motion path 135 to be obtained by changing a rotation angle β2 of the tentative motion path 130 about the second rotation axis 162.

The candidate obtainer 20 changes, for example, the setting value for the rotation angle β1 in steps of a first predetermined angle that is greater than 0 degrees and less than 360 degrees. The first predetermined angle may be 10 degrees, 1 degree, or any other degrees. The first predetermined angle may be set as appropriate for, for example, the length of the shortest one of the sides of the six rectangular prisms 110 representing the shape of the robot 10. The candidate obtainer 20 changes, for example, the setting value for the rotation angle β2 in steps of a second predetermined angle that is greater than 0 degrees and less than 360 degrees. The second predetermined angle may be 10 degrees, 1 degree, or any other degrees. The second predetermined angle may be set as appropriate for, for example, the length of the shortest one of the sides of the six rectangular prisms 110 representing the shape of the robot 10. The second predetermined angle may be the same as or different from the first predetermined angle.

In this example, for example, W1 setting values (W1 is an integer greater than or equal to 1) are prepared for the rotation angle β1. For example, W2 setting values (W2 is an integer greater than or equal to 1) are prepared for the rotation angle β2.

In this example, the candidate obtainer 20 may obtain one candidate motion path 135 in step s1 by rotationally shifting the tentative motion path 130 about the first rotation axis 161 alone (also referred to as a first obtaining method using rotational shifting), by rotationally shifting the tentative motion path 130 about the second rotation axis 162 alone (also referred to as a second obtaining method using rotational shifting), or by rotationally shifting the tentative motion path 130 about the first rotation axis 161 and the second rotation axis 162 (also referred to as a third obtaining method using rotational shifting). The candidate obtainer 20 can obtain a predetermined number T of candidate motion paths 135 by rotationally shifting the tentative motion path 130 about the first rotation axis 161 or the second rotation axis 162 with the first obtaining method, the second obtaining method, or the third obtaining method using rotational shifting.

With the first obtaining method using rotational shifting, the candidate obtainer 20 first rotationally shifts the tentative motion path 130 about the first rotation axis 161 by a setting value for the rotation angle β1 as illustrated in FIG. 13. This completes the shift of the tentative motion path 130. The candidate obtainer 20 then connects the end 131b of the shifted tentative motion path 130f to the ending point 121 with the linear path 132b. In this example, when the tentative motion path 130 is rotated about the first rotation axis 161, the end of the tentative motion path 130 at the starting point 120 is fixed, with no linear path 132a. The candidate obtainer 20 obtains, as one candidate motion path 135, a path including the shifted tentative motion path 130f and the linear path 132b. With the W1 setting values being prepared for the rotation angle β1, the candidate obtainer 20 can obtain W1 candidate motion paths 135 with the first obtaining method using rotational shifting.

With the second obtaining method using rotational shifting, the candidate obtainer 20 first rotationally shifts the tentative motion path 130 about the second rotation axis 162 by a setting value for the rotation angle β2 as illustrated in FIG. 14. This completes the shift of the tentative motion path 130. The candidate obtainer 20 then connects the end 131b of the shifted tentative motion path 130f to the ending point 121 with the linear path 132b. In this example, when the tentative motion path 130 is rotated about the second rotation axis 162, the end of the tentative motion path 130 at the starting point 120 is fixed, with no linear path 132a. The candidate obtainer 20 obtains, as one candidate motion path 135, a path including the shifted tentative motion path 130f and the linear path 132b. With the W2 setting values being prepared for the rotation angle β2, the candidate obtainer 20 can obtain W2 candidate motion paths 135 with the second obtaining method using rotational shifting.

With the third obtaining method using rotational shifting, for example, the candidate obtainer 20 first rotationally shifts the tentative motion path 130 about the first rotation axis 161 by a setting value for the rotation angle β1 as illustrated in FIG. 13. In this state, the shift of the tentative motion path 130 is incomplete. After rotationally shifting the tentative motion path 130 about the first rotation axis 161, the candidate obtainer 20 then rotationally shifts the tentative motion path 130 about the second rotation axis 162 by a setting value for the rotation angle β2. This completes the shift of the tentative motion path 130. The candidate obtainer 20 then connects the end 131b of the shifted tentative motion path 130f to the ending point 121 with the linear path 132b. The candidate obtainer 20 obtains, as one candidate motion path 135, a path including the shifted tentative motion path 130f and the linear path 132b. With the W1 setting values prepared for the rotation angle β1 and the W2 setting values prepared for the rotation angle β2, the candidate obtainer 20 can obtain (W1 × W2) candidate motion paths 135 with the third obtaining method using rotational shifting. Note that, with the third obtaining method using rotational shifting, the tentative motion path 130 may be rotationally shifted about the second rotation axis 162 and then about the first rotation axis 161.

In this manner, the candidate obtainer 20 can obtain the W1 candidate motion paths 135 with the first obtaining method using rotational shifting. The candidate obtainer 20 can obtain the W2 candidate motion paths 135 with the second obtaining method using rotational shifting. The candidate obtainer 20 can obtain the (W1 × W2) candidate motion paths 135 with the third obtaining method using rotational shifting. Thus, the candidate obtainer 20 can obtain a predetermined number T of candidate motion paths 135, where T = W1 + W2 + (W1 × W2).

In the above example, the candidate obtainer 20 rotationally shifts the tentative motion path 130 about the first rotation axis 161 and the second rotation axis 162. However, the candidate obtainer 20 may rotationally shift the tentative motion path 130 about the first rotation axis 161 alone to obtain multiple candidate motion paths 135. In this case, T = W1. The candidate obtainer 20 may rotationally shift the tentative motion path 130 about the second rotation axis 162 alone to obtain multiple candidate motion paths 135. In this case, T = W2.

The positions of the first rotation axis 161 and the second rotation axis 162 are not limited to the above examples. For example, the first rotation axis 161 and the second rotation axis 162 may pass through the ending point 121. In this case, when the tentative motion path 130 is rotated about at least one of the first rotation axis 161 or the second rotation axis 162, the end 131a of the shifted tentative motion path 130f is displaced from the starting point 120 and the end 131b of the shifted tentative motion path 130f is fixed at the ending point 121. In this case, the candidate obtainer 20 obtains, as one candidate motion path 135, a path including the shifted tentative motion path 130f and the linear path 132a connecting the end 131a of the shifted tentative motion path 130f to the starting point 120. The first rotation axis 161 and the second rotation axis 162 may pass through a portion of the initial-position tentative motion path 130i other than the two ends (e.g., the midpoint). In this case, when the tentative motion path 130 is rotated about at least one of the first rotation axis 161 or the second rotation axis 162, the two ends 131a and 131b of the shifted tentative motion path 130f are respectively displaced from the starting point 120 and the ending point 121. In this case, the candidate obtainer 20 obtains, as one candidate motion path 135, a path including the shifted tentative motion path 130f, the linear path 132a connecting the end 131a of the tentative motion path 130f to the starting point 120, and the linear path 132b connecting the end 131b of the tentative motion path 130f to the ending point 121.

The candidate obtainer 20 may obtain multiple candidate motion paths 135 by parallelly shifting or rotationally shifting the tentative motion path 130. For example, the candidate obtainer 20 may obtain multiple candidate motion paths 135 by parallelly shifting the tentative motion path 130 in the first direction 141 and rotationally shifting the tentative motion path 130. In this case, the candidate obtainer 20 may obtain one candidate motion path 135 with one of three main methods. With a first method, the candidate obtainer 20 obtains one candidate motion path 135 by parallelly shifting the tentative motion path 130 in the first direction 141 as in FIG. 7. With a second method, the candidate obtainer 20 obtains one candidate motion path 135 by rotationally shifting the tentative motion path 130 as in FIGs. 13 and 14. With a third method, the candidate obtainer 20 obtains one candidate motion path 135 by parallelly shifting the tentative motion path 130 in the first direction 141 and rotationally shifting the tentative motion path 130. The candidate obtainer 20 can obtain a predetermined number T of candidate motion paths 135 by parallelly shifting or rotationally shifting the tentative motion path 130 with the first method, the second method, or the third method.

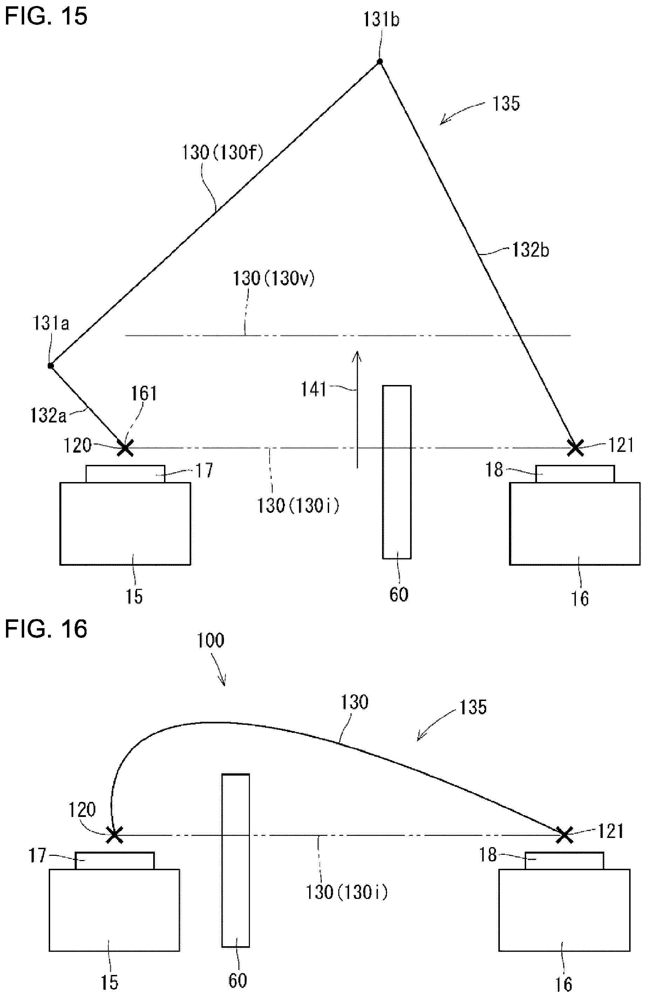

FIG. 15 is a schematic diagram of the tentative motion path 130 being parallelly shifted in the first direction 141 and then rotationally shifted in an example. In the example in FIG. 15, the tentative motion path 130 is parallelly shifted in the first direction 141 and then rotationally shifted about the first rotation axis 161. In other words, the tentative motion path 130v shifted in the first direction is rotationally shifted about the first rotation axis 161.

To obtain one candidate motion path 135 in the example in FIG. 15, the candidate obtainer 20 connects, with the linear path 132a, the starting point 120 to the end 131a of the shifted tentative motion path 130f that has been parallelly shifted in the first direction 141 and then rotationally shifted about the first rotation axis 161. The candidate obtainer 20 also connects the end 131b of the shifted tentative motion path 130f to the ending point 121 with the linear path 132b. The candidate obtainer 20 obtains, as one candidate motion path 135, a path including the shifted tentative motion path 130f, the linear path 132a, and the linear path 132b.

Note that the tentative motion path 130 may be parallelly shifted and rotationally shifted about the second rotation axis 162. The tentative motion path 130 may also be parallelly shifted, rotationally shifted about the first rotation axis 161, and rotationally shifted about the second rotation axis 162. The parallel shift and the rotational shift of the tentative motion path 130 may be performed in any order other than the above.

The candidate obtainer 20 may obtain multiple candidate motion paths 135 by parallelly shifting the tentative motion path 130 in the first direction 141 and in the second direction 142 and rotationally shifting the tentative motion path 130. In this case, the candidate obtainer 20 may obtain one candidate motion path 135 with one of five main methods. With a first method, the candidate obtainer 20 obtains one candidate motion path 135 by parallelly shifting the tentative motion path 130 in the first direction 141 as in FIG. 7. With a second method, the candidate obtainer 20 obtains one candidate motion path 135 by parallelly shifting the tentative motion path 130 in the first direction 141 and in the second direction 142 as in FIGs. 11 and 12. With a third method, the candidate obtainer 20 obtains one candidate motion path 135 by rotationally shifting the tentative motion path 130 as in FIGs. 13 and 14. With a fourth method, the candidate obtainer 20 obtains one candidate motion path 135 by parallelly shifting the tentative motion path 130 in the first direction 141 and rotationally shifting the tentative motion path 130 as in the example in FIG. 15. With a fifth method, the candidate obtainer 20 obtains one candidate motion path 135 by parallelly shifting the tentative motion path 130 in the first direction 141 and in the second direction 142 and rotationally shifting the tentative motion path 130. The candidate obtainer 20 can obtain a predetermined number T of candidate motion paths 135 with the first method, the second method, the third method, the fourth method, or the fifth method.

In this manner, the candidate obtainer 20 can obtain multiple candidate motion paths 135 by rotationally shifting the tentative motion path 130. This allows the multiple candidate motion paths 135 to be obtained with a relatively simple process performed for the tentative motion path 130.

The candidate obtainer 20 may obtain multiple candidate motion paths 135 by deforming the tentative motion path 130. For example, the candidate obtainer 20 may obtain multiple candidate motion paths 135 by deforming the tentative motion path 130 into a curve. The curve may be a Bézier curve, a spline curve, or a quadratic curve. The shape of each of the Bézier curve, the quadratic curve, and the spline curve can be defined by setting three points in the physical workspace 100. The candidate obtainer 20 may deform the tentative motion path 130 into multiple curves, each of which may be set as one candidate motion path 135.

FIG. 16 is a schematic diagram of the tentative motion path 130 being deformed into a quadratic Bézier curve connecting the starting point 120 and the ending point 121 in an example. To obtain one candidate motion path 135, the candidate obtainer 20 sets, for example, a control point of the Bézier curve other than the starting point 120 and the ending point 121 in the physical workspace 100. The candidate obtainer 20 also sets the starting point 120 as one of the starting point or the ending point of the Bézier curve, and sets the ending point 121 as the other of the starting point or the ending point of the Bézier curve. With the three points being set in the physical workspace 100 in this manner, the candidate obtainer 20 can deform the tentative motion path 130 into the quadratic Bézier curve connecting the starting point 120 and the ending point 121. The candidate obtainer 20 obtains the tentative motion path 130 deformed into the quadratic Bézier curve as one candidate motion path 135. The shape of the quadratic Bézier curve is determined by the position of the control point. Thus, the candidate obtainer 20 can change the candidate motion path 135 to be obtained by changing the position of the control point. With multiple setting values being prepared for the positions of control points, the candidate obtainer 20 can deform the tentative motion path 130 into multiple Bézier curves with different shapes. A control point may be set on, for example, the plane 150 orthogonal to the initial-position tentative motion path 130i in the same manner as or in a similar manner to the waypoint 155. The position of a control point on the plane 150 may be expressed in, for example, polar coordinates as illustrated in FIG. 8. As illustrated in FIG. 10, the grid points 157 on the plane 150 may be used as control points.

The candidate obtainer 20 may obtain multiple candidate motion paths 135 by shifting and deforming the tentative motion path 130. In this case, the candidate obtainer 20 may obtain one candidate motion path 135 with one of three main methods. With a first method, the candidate obtainer 20 obtains one candidate motion path 135 by shifting the tentative motion path 130 as in, for example, FIGs. 7 and 11 to 15. With a second method, the candidate obtainer 20 obtains one candidate motion path 135 by deforming the tentative motion path 130 as in FIG. 16. With a third method, the candidate obtainer 20 obtains one candidate motion path 135 by shifting and deforming the tentative motion path 130. The candidate obtainer 20 can obtain a predetermined number T of candidate motion paths 135 by shifting or deforming the tentative motion path 130 with the first method, the second method, or the third method.

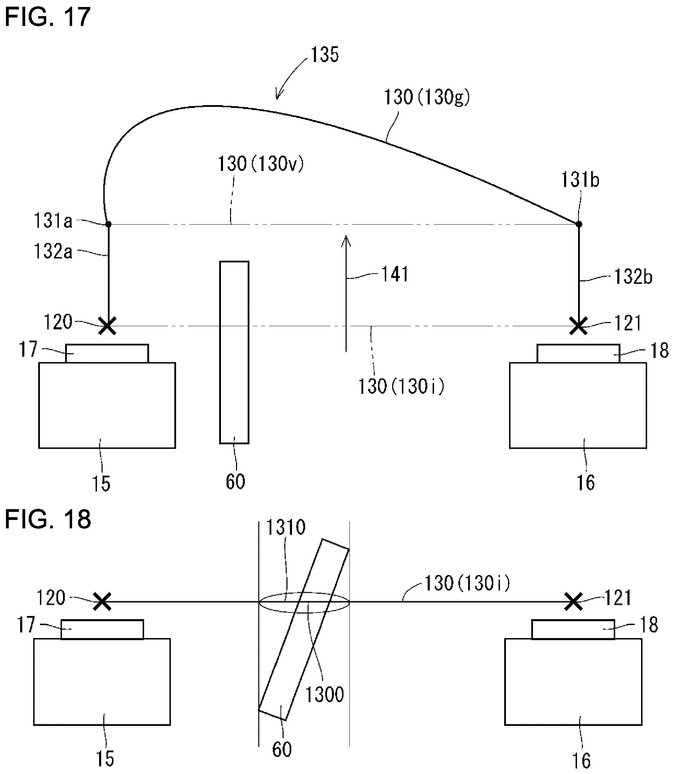

FIG. 17 is a schematic diagram describing an example operation performed by the candidate obtainer 20 to obtain one candidate motion path 135 by shifting and deforming the tentative motion path 130. To obtain one candidate motion path 135, for example, the candidate obtainer 20 shifts the tentative motion path 130. In the example in FIG. 17, the candidate obtainer 20 parallelly shifts the tentative motion path 130 in the first direction 141. The candidate obtainer 20 then deforms the shifted tentative motion path 130 into a curve. In the example in FIG. 17, the candidate obtainer 20 deforms the tentative motion path 130v shifted in the first direction into a quadratic Bézier curve. The candidate obtainer 20 sets the end 131a of the tentative motion path 130v shifted in the first direction as one of the starting point or the ending point of the Bézier curve, and sets the end 131b of the tentative motion path 130v shifted in the first direction as the other of the starting point or the ending point of the Bézier curve.

The candidate obtainer 20 then connects the end 131a of the shifted and deformed tentative motion path 130 (also referred to as a tentative motion path 130g) to the starting point 120 with the linear path 132a. The candidate obtainer 20 also connects the end 131b of the shifted and deformed tentative motion path 130g to the ending point 121 with the linear path 132b. The candidate obtainer 20 obtains, as one candidate motion path 135, a path including the shifted and deformed tentative motion path 130g, the linear path 132a, and the linear path 132b. Note that the candidate obtainer 20 may deform the tentative motion path 130 before shifting the tentative motion path 130 to obtain one candidate motion path 135.

In this manner, the candidate obtainer 20 can obtain multiple candidate motion paths 135 by deforming the tentative motion path 130. This allows the multiple candidate motion paths 135 to be obtained with a relatively simple process performed for the tentative motion path 130.

In the above examples, the candidate obtainer 20 obtains multiple candidate motion paths 135 by at least shifting or deforming the entire tentative motion path 130. However, the candidate obtainer 20 may obtain at least one of the predetermined number T of candidate motion paths 135 by at least shifting or deforming a part of the tentative motion path 130. For example, the candidate obtainer 20 may obtain a new candidate motion path 135 different from the initial-position tentative motion path 130i by at least shifting or deforming a path segment of the initial-position tentative motion path 130i including an area that interferes with the obstacle 60. An area of the initial-position tentative motion path 130i that interferes with the obstacle 60 may also be referred to as an area of the initial-position tentative motion path 130i that meets the obstacle 60.

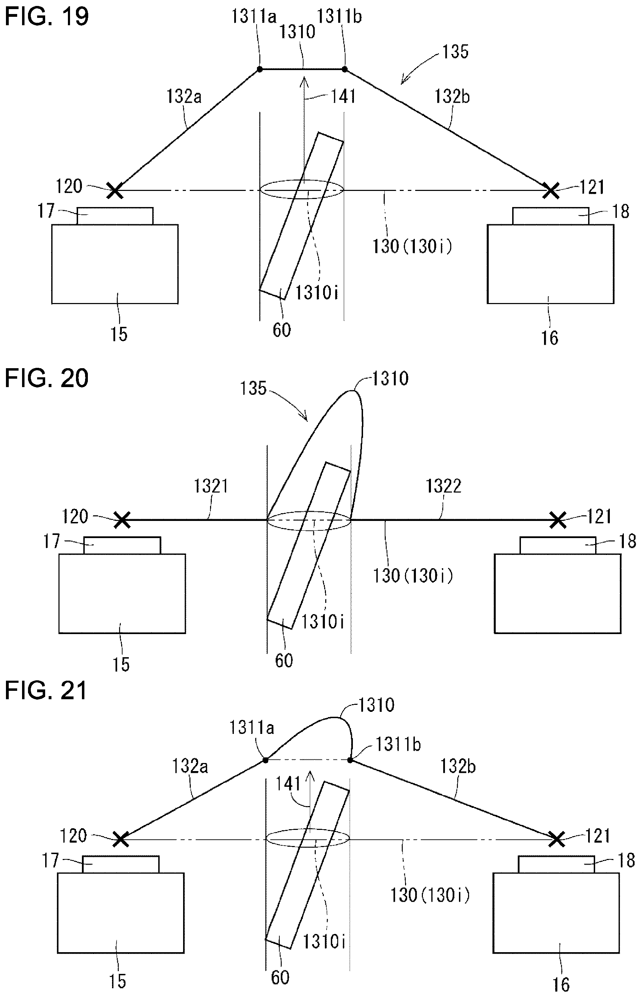

Each of FIGs. 18 and 19 is a schematic diagram describing an example operation performed by the candidate obtainer 20 to obtain a candidate motion path 135 different from the initial-position tentative motion path 130i by shifting a path segment of the initial-position tentative motion path 130i including an area that interferes with the obstacle 60.

For example, the determiner 21 sets a path segment 1310 of the initial-position tentative motion path 130i to be shifted. The path segment 1310 includes an area 1300 that interferes with the obstacle 60 (in other words, an area 1300 that meets the obstacle 60). More specifically, for example, the determiner 21 projects the shape of the obstacle 60 onto the initial-position tentative motion path 130i and extracts a line segment as an overlap between the obstacle 60 and the initial-position tentative motion path 130i. The determiner 21 sets the overlap as the path segment 1310. The determiner 21 can set the path segment 1310 based on the obstacle information 32.

The candidate obtainer 20 obtains at least one new candidate motion path 135 by shifting the path segment 1310 set by the determiner 21, in the same manner as or in a similar manner to shifting the entire tentative motion path 130. The shifting of the path segment 1310 may be parallel shifting, rotational shifting, or a combination of parallel shifting and rotational shifting. A path segment 1310 included in the initial-position tentative motion path 130i before being shifted may be hereafter referred to as an initial-position path segment 1310i.

FIG. 19 is a schematic diagram describing an example operation performed by the candidate obtainer 20 to obtain one candidate motion path 135 by shifting the path segment 1310 in the first direction 141. In the example in FIG. 19, the initial-position path segment 1310i included in the initial-position tentative motion path 130i does not include the starting point 120 or the ending point 121. In this case, the candidate obtainer 20 connects, with the linear path 132a, the starting point 120 to an end 1311a of the path segment 1310 shifted in the first direction 141. The end 1311a is one of two ends 1311a and 1311b of the shifted path segment 1310 corresponding to the end of the initial-position path segment 1310i that is adjacent to the starting point 120. The candidate obtainer 20 also connects, with the linear path 132b, the ending point 121 to the end 1311b of the path segment 1310 shifted in the first direction 141. The end 1311b is one of the two ends 1311a and 1311b corresponding to the end of the initial-position path segment 1310i that is adjacent to the ending point 121. The candidate obtainer 20 obtains, as one candidate motion path 135, a path including the path segment 1310 shifted in the first direction 141 or the shifted path segment 1310, the linear path 132a, and the linear path 132b.

The candidate obtainer 20 may obtain multiple candidate motion paths 135 by deforming the path segment 1310 in the same manner as or in a similar manner to deforming the entire tentative motion path 130 as in FIG. 16. The candidate obtainer 20 may obtain multiple candidate motion paths 135 by shifting and deforming the path segment 1310 in the same manner as or in a similar manner to shifting and deforming the entire tentative motion path 130 as in FIG. 17.

FIG. 20 is a schematic diagram of the path segment 1310 being deformed to obtain one candidate motion path 135 in an example. In the example in FIG. 20, a path including a first portion 1321, a second portion 1322, and the deformed path segment 1310 is obtained as one candidate motion path 135. The first portion 1321 is a portion of the initial-position tentative motion path 130i connecting one end of the deformed path segment 1310 to the starting point 120. The second portion 1322 is a portion of the initial-position tentative motion path 130i connecting the other end of the deformed path segment 1310 to the ending point 121.

FIG. 21 is a schematic diagram of the path segment 1310 being shifted and deformed to obtain one candidate motion path 135 in an example. In the example in FIG. 21, the path segment 1310 is parallelly shifted in the first direction 141 and then deformed to obtain one candidate motion path 135. In the example in FIG. 21, the end 1311a of the shifted and deformed path segment 1310 is connected to the starting point 120 with the linear path 132a. The end 1311b of the shifted and deformed path segment 1310 is connected to the ending point 121 with the linear path 132b. A path including the shifted and deformed path segment 1310, the linear path 132a, and the linear path 132b is obtained as one candidate motion path 135.

In this manner, the candidate obtainer 20 can obtain at least one new candidate motion path 135 by at least shifting or deforming a path segment of the initial-position tentative motion path 130i including an area that interferes with the obstacle 60. This can set the motion path of the robot 10 efficiently.

Note that the candidate obtainer 20 may use a path segment of the initial-position tentative motion path 130i including an area in which the robot 10 interferes with the obstacle 60, instead of using the above path segment 1310. More specifically, the candidate obtainer 20 may obtain at least one candidate motion path 135 by at least shifting or deforming a path segment of the initial-position tentative motion path 130i including an area in which the robot 10 interferes with the obstacle 60 (also referred to as a second path segment). An area of the initial-position tentative motion path 130i in which the robot 10 interferes with the obstacle 60 is an area in which the robot 10 interferes with the obstacle 60 when the robot 10 moves in the area. The determiner 21 performs the above interference determination process for the initial-position tentative motion path 130i, and uses the determination result to identify an area of the initial-position tentative motion path 130i in which the robot 10 interferes with the obstacle 60. Note that the candidate obtainer 20 may obtain at least one candidate motion path 135 by at least shifting or deforming the path segment 1310, and may obtain at least one candidate motion path 135 by at least shifting or deforming the second path segment.

When the new candidate motion path 135 still interferes with the obstacle 60, the candidate obtainer 20 may obtain another new candidate motion path 135 using a part of the above candidate motion path 135 as a path segment, or may obtain another new candidate motion path 135 based on a path segment that is set in the above candidate motion path 135. Other Operation Examples of Path Setter

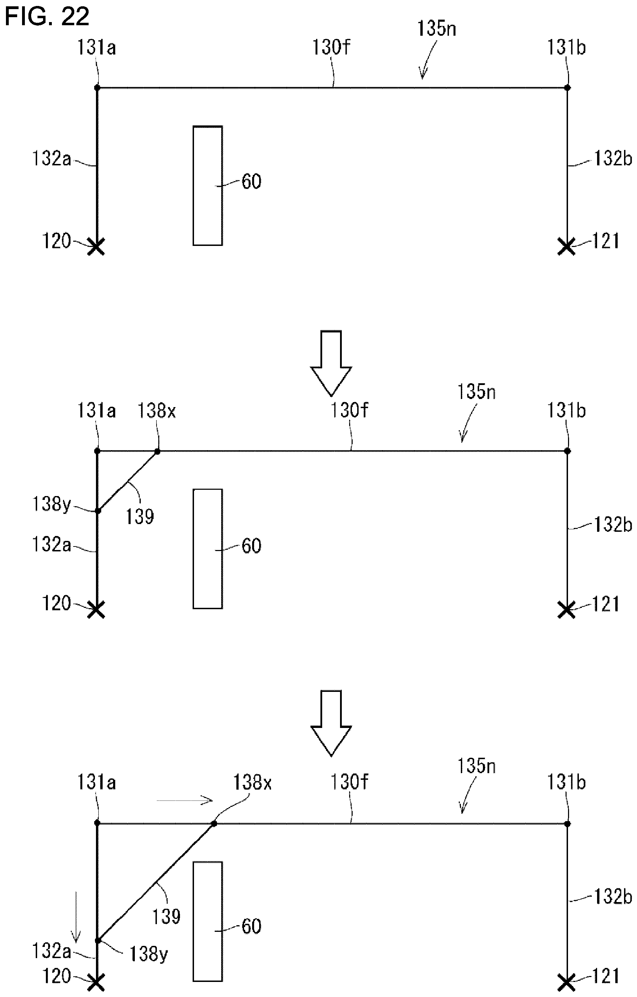

In the above examples, the path setter 22 sets a candidate non-interference path 135 directly as the motion path of the robot 10. However, the path setter 22 may set, as the motion path, the candidate non-interference path 135 that has been deformed. For example, the path setter 22 may set, as the motion path, the candidate non-interference path 135 that has been deformed to cut off its corner. FIG. 22 is a schematic diagram describing an example operation of the path setter 22 in this case. The candidate non-interference path 135 may be hereafter referred to as a candidate non-interference path 135n.

For example, the candidate non-interference path 135n illustrated in the top diagram in FIG. 22 may be deformed to be set as the motion path. The candidate non-interference path 135 includes, for example, the shifted tentative motion path 130f. For example, the path setter 22 sets, as the motion path, the candidate non-interference path 135n that has been deformed to cut off the corner formed by the shifted tentative motion path 130f and the linear path 132a (in other words, to trim the corner).

As illustrated in the middle diagram in FIG. 22, for example, the path setter 22 sets a point 138x on the tentative motion path 130f at a position away from the end 131a by a predetermined distance toward the end 131b. The path setter 22 also sets, for example, a point 138y on the linear path 132a at a position away from the end 131a by a predetermined distance toward the starting point 120. The path setter 22 sets a linear path 139 connecting the point 138x and the point 138y.

The determiner 21 then determines whether the robot 10 interferes with the obstacle 60 on the linear path 139 set by the path setter 22. More specifically, the determiner 21 determines whether the robot 10 interferes with the obstacle when the predetermined portion P of the robot 10 moves along the linear path 139. The determiner 21 can determine whether the robot 10 interferes with the obstacle 60 on the linear path 139 in the same manner as or in a similar manner to the above interference determination process.

When the determiner 21 determines that the robot 10 interferes with the obstacle 60 on the linear path 139, the path setter 22 sets the candidate non-interference path 135n directly as the motion path of the robot 10 without deformation. When the robot 10 is determined not to interfere with the obstacle 60 on the linear path 139, the path setter 22 shifts the point 138x on the tentative motion path 130f toward the end 131b by a predetermined distance to be further away from the end 131a by the predetermined distance as illustrated in the bottom diagram in FIG. 22. The path setter 22 further shifts the point 138y on the linear path 132a toward the starting point 120 by a predetermined distance to be further away from the end 131a by the predetermined distance. The path setter 22 newly sets a linear path 139 connecting the shifted point 138x and the shifted point 138y. The predetermined distance by which each of the points 138a and 138y is shifted may be set as appropriate for, for example, the length of the shortest one of the sides of the six rectangular prisms 110 representing the shape of the robot 10.

Note that, when the position of the point 138x is beyond the end 131b after being shifted toward the end 131b by the predetermined distance, the path setter 22 sets the point 138x at the end 131b. When the position of the point 138y is beyond the starting point 120 after being shifted toward the starting point 120 by the predetermined distance, the path setter 22 sets the point 138y at the starting point 120.

The determiner 21 then determines whether the robot 10 interferes with the obstacle 60 on the linear path 139 newly set by the path setter 22. When the robot 10 is determined not to interfere with the obstacle 60 on the newly set linear path 139, the path setter 22 shifts the point 138x further toward the end 131b by the predetermined distance and shifts the point 138y further toward the starting point 120 by the predetermined distance. The path setter 22 thereafter operates in the same manner as or in a similar manner to the above.

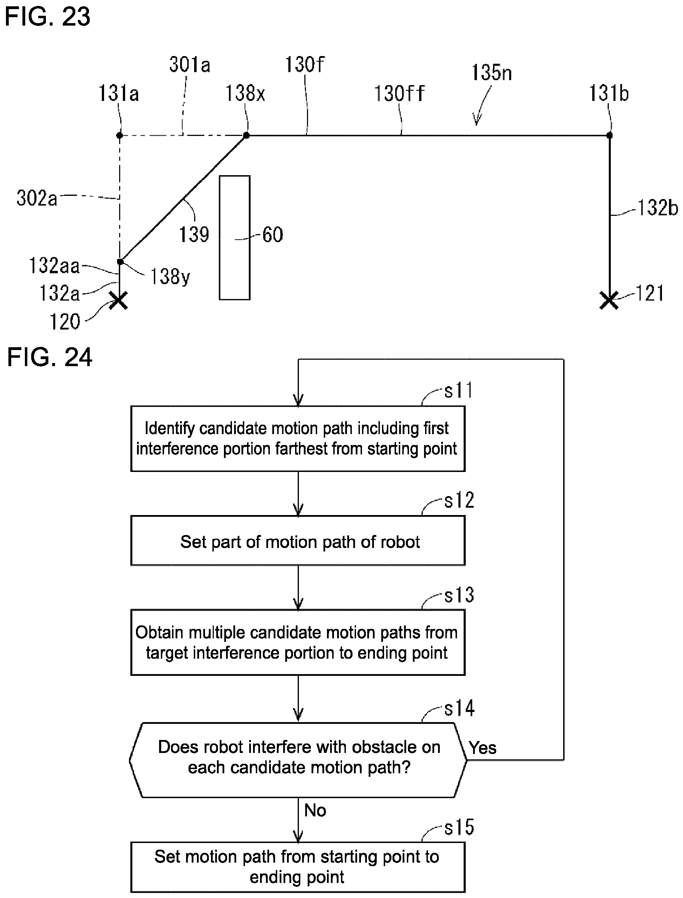

When the robot 10 is determined to interfere with the obstacle 60 on the newly set linear path 139, the path setter 22 deforms the candidate non-interference path 135n based on the previously set linear path 139, or specifically, the linear path 139 on which the robot 10 is determined not to interfere with the obstacle 60 last time. The path setter 22 deforms the candidate non-interference path 135n to use the previously set linear path 139, instead of using a portion 301a of the tentative motion path 130f connecting the previously set point 138x to the end 131a and instead of using a portion 302a of the linear path 132a connecting the previously set point 138y to the end 131a. The path setter 22 then sets the deformed candidate non-interference path 135n as the motion path of the robot 10. Thus, as illustrated in FIG. 23, a path including the previously set linear path 139, a path segment 130ff, a path segment 132aa, and the linear path 132b is set as the motion path of the robot 10. The path segment 130ff is a segment of the tentative motion path 130f connecting the previously set point 138x to the end 131b. The path segment 132aa is a segment of the linear path 132a connecting the previously set point 138y to the starting point 120.

In the above example, the path setter 22 sets the candidate non-interference path 135n that has been deformed to cut off the corner formed by the tentative motion path 130f and the linear path 132a as the motion path. However, the path setter 22 may set the candidate non-interference path 135n that has been deformed to cut off the corner formed by the tentative motion path 130f and the linear path 132b as the motion path. The candidate non-interference path 135n may be deformed to cut off the corner formed by the tentative motion path 130f and the linear path 132b in the same manner as or in a similar manner to the candidate non-interference path 135n being deformed to cut off the corner formed by the tentative motion path 130f and the linear path 132a. The path setter 22 may set, as the motion path, the candidate non-interference path 135n that has been deformed to cut off both the corner (first corner) formed by the tentative motion path 130f and the linear path 132a and the corner (second corner) formed by the tentative motion path 130f and the linear path 132b. The path setter 22 may deform the candidate non-interference path 135n to cut off at least one of the first corner or the second corner. In this case, the path setter 22 may use a curved path in place of the linear path 139. In the example in FIGs. 22 and 23, for example, the path setter 22 may connect the points 138x and 138y with a path curved toward the end 131a. In this case, the first corner is cut off to be rounded. Note that the second corner may be cut off to be rounded.

### Operation Example of Path Setter with No Candidate Non-Interference Path

FIG. 24 is a flowchart of an example operation of the controller 2 performed when the robot 10 is determined to interfere with the obstacle 60 on each of a predetermined number T of candidate motion paths 135. The process illustrated in FIG. 24 is performed when all the predetermined number T of candidate motion paths 135 are candidate interference paths 135. The direction in which the starting point 120 and the ending point 121 are connected is hereafter referred to as a starting-ending direction.

When the process illustrated in FIG. 5 ends without step s3 being performed, the path setter 22 performs step s11. In step s11, the path setter 22 identifies a target candidate interference path 135 from the predetermined number T of candidate interference paths 135. The target candidate interference path 135 is the candidate interference path 135 including a first interference portion 136 farthest from the starting point 120 in the starting-ending direction. The first interference portion 136 is a portion on which the robot 10 first interferes with the obstacle 60. As described above, in the interference determination process, the determination is performed as to whether the robot 10 interferes with the obstacle 60 when the predetermined portion P of the robot 10 is placed at each position on the candidate motion path 135 from the starting point 120 to the ending point 121. The path setter 22 can identify the target candidate interference path 135 based on the implementation of the interference determination process for the predetermined number T of candidate motion paths 135. The first interference portion 136 of the target candidate interference path 135 is hereafter referred to as a target interference portion 136.

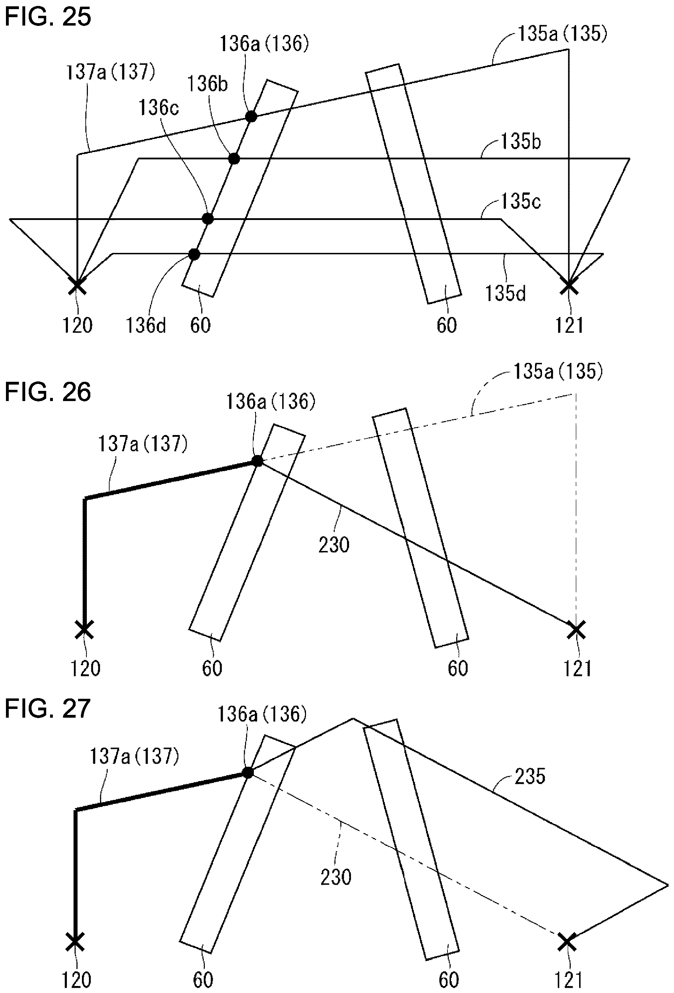

For example, T = 4, with four candidate interference paths 135 as illustrated in FIG. 25. The respective four candidate interference paths 135 illustrated in FIG. 25 are referred to as candidate interference paths 135a, 135b, 135c, and 135d. The first interference portions 136 of the respective candidate interference paths 135a, 135b, 135c, and 135d are referred to as first interference portions 136a, 136b, 136c, and 136d. Note that, in FIG. 25, the position on the candidate interference path 135 that first interferes with the obstacle 60 is defined as the position of the first interference portion 136 for ease of explanation. However, the position of the first interference portion 136 is not limited to this position.

In the example in FIG. 25, the first interference portion 136a is the farthest from the starting point 120 in the starting-ending direction (the lateral direction in FIG. 25) among the first interference portions 136a, 136b, 136c, and 136d. The path setter 22 thus sets the candidate interference path 135a as the target candidate interference path 135. The first interference portion 136a of the candidate interference path 135a is the target interference portion 136a.

In step s12 following step s11, the path setter 22 sets, as a part of the motion path of the robot 10, a path segment 137 that is a segment of the target candidate interference path 135 from the starting point 120 to the target interference portion 136. In other words, the path setter 22 sets, as a part of the motion path of the robot 10, the path segment 137 that is a segment of the target candidate interference path 135 from its end opposite to the ending point 121 to the target interference portion 136. In the example in FIG. 25, the path setter 22 sets, as a part of the motion path, the path segment 137 that is a segment of the candidate interference path 135a from the starting point 120 to the first interference portion 136a (also referred to as a path segment 137a).

**In** step s13, the candidate obtainer 20 obtains a predetermined number T of candidate motion paths 235 from the target interference portion 136 of the target candidate interference path 135 to the ending point 121. In step s13, as illustrated in FIG. 26, the candidate obtainer 20 first sets a shortest tentative motion path 230 connecting the target interference portion 136 (the target interference portion 136a in this example) to the ending point 121. The tentative motion path 230 is indicated by the line segment connecting the target interference portion 136 to the ending point 121. The tentative motion path 230 may be the shortest motion path of the predetermined portion P of the robot 10 from the target interference portion 136 to the ending point 121. The candidate obtainer 20 then obtains a predetermined number T of candidate motion paths 235 by at least shifting or deforming at least a part of the tentative motion path 230. The candidate obtainer 20 can obtain the predetermined number T of candidate motion paths 235 by at least shifting or deforming at least a part of the tentative motion path 230, in the same manner as or in a similar manner to the candidate obtainer 20 obtaining the predetermined number T of candidate motion paths 135 by at least shifting or deforming at least a part of the tentative motion path 130. FIG. 27 is a schematic diagram of one candidate motion path 235 in an example.

In step s14 following step s13, the determiner 21 determines whether the robot 10 interferes with the obstacle 60 on each of the predetermined number T of candidate motion paths 235 in the same manner as or in a similar manner to the above interference determination process. In step s14, the determiner 21 selects, for example, one of the predetermined number T of candidate motion paths 235. The determiner 21 then determines whether the robot 10 interferes with the obstacle 60 on the selected candidate motion path 235. When the determiner 21 determines that the robot 10 does not interfere with the obstacle 60 on the selected candidate motion path 235 (No in step s14), step s15 is performed. When the determiner 21 determines that the robot 10 interferes with the obstacle 60 on the selected candidate motion path 235, the determiner 21 selects a new candidate motion path 235 from the predetermined number T of candidate motion paths 235. The determiner 21 then determines whether the robot 10 interferes with the obstacle 60 on the selected new candidate motion path 235. When the determiner 21 determines that the robot 10 does not interfere with the obstacle 60 on the selected new candidate motion path 235 (No in step s14), step s15 is performed. When the determiner 21 determines that the robot 10 interferes with the obstacle 60 on the selected new candidate motion path 235, the determiner 21 selects another new candidate motion path 235 from the predetermined number T of candidate motion paths 235. The determiner 21 thereafter operates in the same manner as or in a similar manner to the above. When the determiner 21 determines that the robot 10 interferes with the obstacle 60 on each of the predetermined number T of candidate motion paths 235 (Yes in step s14), step s11 is performed again. In this case, all the predetermined number T of candidate motion paths 235 are candidate interference paths 235.

In step s11 performed again, the path setter 22 performs the same or similar process as described above for the predetermined number T of candidate interference paths 235. More specifically, the path setter 22 identifies a target candidate motion path 235 from the predetermined number T of candidate interference paths 235. The target candidate motion path 235 is the candidate interference path 235 including a first interference portion 236 farthest from the starting point 120 in the starting-ending direction. The first interference portion 236 is a portion on which the robot 10 first interferes with the obstacle 60. The path setter 22 can identify the target candidate interference path 235 based on the implementation of step s14. The first interference portion 236 of the target candidate interference path 235 is hereafter referred to as a target interference portion 236.

Following step s11, the path setter 22 performs step s12 again. In step s12, the path setter 22 performs the same or similar process as described above for the target candidate interference path 235. More specifically, the path setter 22 sets, as a part of the motion path of the robot 10, a path segment 237 that is a segment of the target candidate interference path 235 from an end 238 opposite to the ending point 121 to the target interference portion 236.

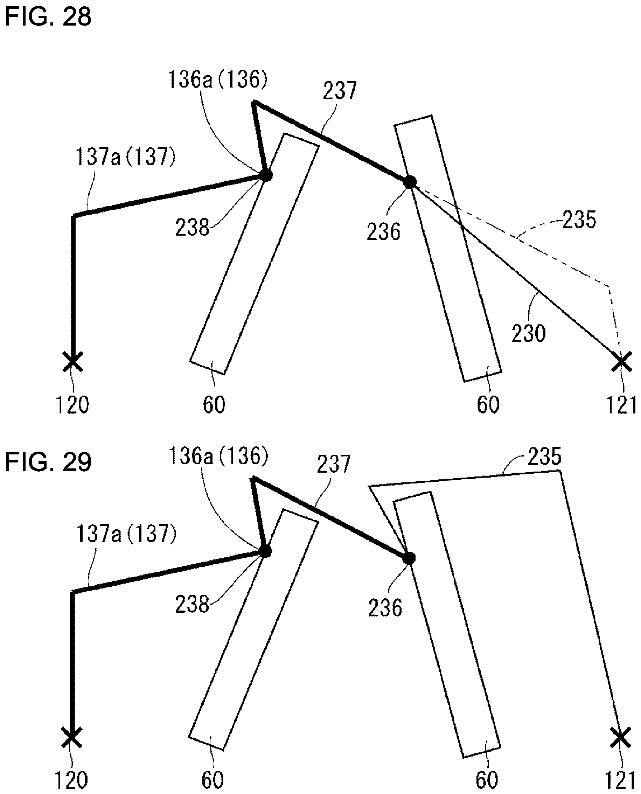

FIG. 28 is a schematic diagram of the path segment 237, which is a segment of the target candidate interference path 235 from the end 238 opposite to the ending point 121 to the target interference portion 236, being set as a part of the motion path of the robot 10 in an example. In the example in FIG. 28, the end 238 opposite to the ending point 121 in the target candidate interference path 235 is aligned with the first interference portion 136a.

In step s13 following step s12, the candidate obtainer 20 sets, as a new tentative motion path 230, the shortest path connecting the target interference portion 236 of the target candidate interference path 235 to the ending point 121 as illustrated in FIG. 28. The candidate obtainer 20 then obtains a predetermined number T of new candidate motion paths 235 from the target interference portion 236 to the ending point 121 by at least shifting or deforming at least a part of the new tentative motion path 230.

In step s14, the determiner 21 determines whether the robot 10 interferes with the obstacle 60 on each of the predetermined number T of new candidate motion paths 235 obtained in step s13. When the determination result is negative in step s14, the path setter 22 performs step s15. When the determination result is affirmative in step s14, step s11 is performed again. In step s11, the path setter 22 identifies a target candidate interference path 235 from the predetermined number T of new candidate interference paths 235. The target candidate interference path 235 is the candidate interference path 235 including the first interference portion 236 farthest from the starting point 120 in the starting-ending direction. In step s12, the path setter 22 sets, as a part of the motion path of the robot 10, the path segment 237 that is a segment of the new target candidate interference path 235 from the end 238 opposite to the ending point 121 to a new target interference portion 236. The candidate obtainer 20, the determiner 21, and the path setter 22 thereafter operate in the same manner as or in a similar manner to the above.

In step s15 performed when the determination result is negative in step s14, the path setter 22 sets the motion path of the robot 10 from the starting point 120 to the ending point 121. More specifically, the path setter 22 sets, as the motion path of the robot 10 from the starting point 120 to the ending point 121, a path including a part of the motion path that is previously set and the candidate non-interference path 235. For example, as illustrated in FIG. 29, the motion path of the robot 10 from the starting point 120 to the ending point 121 may include the path segments 137a and 237 (thick line segments) that have been set as parts of the motion path and include the candidate non-interference path 235 connecting the first interference portion 236 and the ending point 121.

In this manner, in the example in FIG. 24, when the robot 10 is determined to interfere with the obstacle 60 on each of the multiple candidate motion paths 135, the path setter 22 identifies the target candidate motion path 135 from the multiple candidate motion paths 135. The target candidate motion path 135 is the candidate motion path 135 including the first interference portion 136 farthest from the starting point 120 in the starting-ending direction. The first interference portion 136 is a portion on which the robot 10 first interferes with the obstacle 60. The path setter 22 sets, as a part of the motion path, the path segment 137 that is a segment of the identified target candidate motion path 135 from the starting point 120 to the first interference portion 136. The candidate obtainer 20 then sets at least a part of the portion of the motion path of the robot 10 other than the path segment 137 by at least shifting or deforming at least a part of the shortest tentative motion path 230 connecting the first interference portion 136 and the ending point 121. In this manner, the motion path of the robot 10 can be set appropriately when the robot 10 is determined to interfere with the obstacle 60 on each of the multiple candidate motion paths 135.

### Other Examples of Motion Path Setting Process Performed by Controller

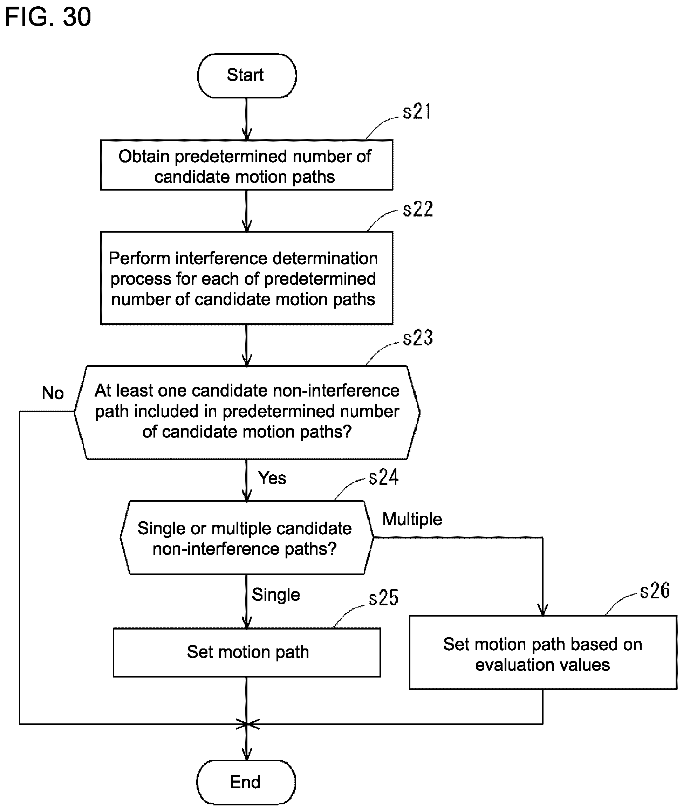

FIG. 30 is a flowchart of an example motion path setting process performed by the controller 2. As illustrated in FIG. 30, in step s21, the candidate obtainer 20 obtains a predetermined number T of candidate motion paths 135 in the manner described above. In step s22, the determiner 21 performs the interference determination process for each of the predetermined number T of candidate motion paths 135 to determine whether the robot 10 interferes with the obstacle 60 on the candidate motion path 135 as described above.

In step s23, the path setter 22 determines, based on the result from step s22, whether the predetermined number T of candidate motion paths 135 include at least one candidate non-interference path 135. When the determination result is affirmative in step s23, step s24 is performed. When the determination result is negative in step s23, the motion path setting process ends.

In step s24, the path setter 22 determines whether the predetermined number T of candidate motion paths 135 include a single candidate non-interference path 135 or multiple candidate non-interference paths 135. When a single candidate non-interference path 135 is included, the path setter 22 performs step s25. When multiple candidate non-interference paths 135 are included, the path setter 22 performs step s26.

In step s25, for example, the path setter 22 sets the single candidate non-interference path 135 included in the predetermined number T of candidate motion paths 135 as the motion path of the robot 10. Note that the path setter 22 may set, as the motion path of the robot 10, the candidate non-interference path 135 that has been deformed as in FIGs. 22 and 23 described above.

In step s26, the path setter 22 sets the motion path of the robot 10 based on a candidate non-interference path 135 selected from the multiple candidate non-interference paths 135 included in the predetermined number T of candidate motion paths 135. In step s26, the path setter 22 calculates predetermined evaluation values for the respective candidate non-interference paths 135. The path setter 22 then selects one of the multiple candidate non-interference paths 135 based on the calculated multiple evaluation values. The path setter 22 then sets the motion path of the robot 10 based on the selected candidate non-interference path 135. The path setter 22 may set the selected candidate non-interference path 135 as the motion path of the robot 10. The path setter 22 may instead set, as the motion path of the robot 10, the selected candidate non-interference path 135 that has been deformed as in FIGs. 22 and 23. A candidate motion path 135 that is focused on is hereafter referred to as a focused candidate motion path 135. A candidate non-interference path 135 that is focused on is referred to as a focused candidate non-interference path 135.

The evaluation value of the focused candidate non-interference path 135 indicates, for example, the appropriateness of using the focused candidate non-interference path 135 to set the motion path of the robot 10. For example, the focused candidate non-interference path 135 having a greater evaluation value indicates the focused candidate non-interference path 135 being more appropriate for use to set the motion path of the robot 10. In step s26, the path setter 22 selects the candidate non-interference path 135 with the greatest evaluation value from the multiple candidate non-interference paths 135, and uses the selected candidate non-interference path 135 to set the motion path.

The evaluation value may be calculated with any of various methods. For example, when the robot 10 passes near the obstacle 60 while moving along the focused candidate non-interference path 135, the focused candidate non-interference path 135 may be less appropriate for use to set the motion path of the robot 10. The path setter 22 may thus calculate the evaluation value of the focused candidate non-interference path 135 based on, for example, the distance between the robot 10 and the obstacle 60 on the focused candidate non-interference path 135. In this case, for example, the path setter 22 calculates, based on the robot information 31 and the obstacle information 32, the shortest distances between the robot 10 and the obstacle 60 with the predetermined portion P of the robot 10 placed at respective positions on the focused candidate non-interference path 135. The path setter 22 then determines the minimum value of the calculated multiple shortest distances to be a shortest distance D between the robot 10 and the obstacle 60 on the focused candidate non-interference path 135. The path setter 22 uses the shortest distance D as the evaluation value.

The initial-position tentative motion path 130 is the shortest path from the starting point 120 to the ending point 121. Thus, a focused candidate non-interference path 135 that is farther from the initial-position tentative motion path 130 is longer. Using such a longer focused candidate non-interference path 135, the motion path of the robot 10 may be longer. Such a focused candidate non-interference path 135 may be less appropriate for use to set the motion path of the robot 10. The path setter 22 may thus calculate the evaluation value based on the proximity of the focused candidate non-interference path 135 to the initial-position tentative motion path 130. In this case, for example, the path setter 22 calculates the distance between the initial-position tentative motion path 130 and a portion of the focused candidate non-interference path 135 corresponding to a portion of the tentative motion path 130 that has undergone at least one of shifting or deforming (also referred to as a tentative motion path corresponding portion). A direction perpendicular to the initial-position tentative motion path 130 is referred to as a perpendicular direction. The path setter 22 calculates the linear distances in the perpendicular direction from the initial-position tentative motion path 130 to the tentative motion path corresponding portion at respective positions. The path setter 22 uses the sum of the calculated multiple linear distances to indicate a degree of proximity C of the focused candidate non-interference path 135 to the initial-position tentative motion path 130 (also referred to as a proximity degree C). The path setter 22 uses a negative value of the proximity degree C as the evaluation value of the focused candidate non-interference path 135. Thus, the focused candidate non-interference path 135 having a smaller proximity degree C, or in other words, being closer to the tentative motion path 130, has a greater evaluation value.

Note that the path setter 22 may calculate the evaluation value based on the shortest distance D and the proximity degree C. For example, the path setter 22 may determine the evaluation value to be D - q × C, where q is a coefficient that determines the degree to which the evaluation value is affected by the shortest distance D and the proximity degree C.

In this manner, the path setter 22 sets the motion path of the robot 10 based on a candidate non-interference path 135 selected from the multiple candidate non-interference paths 135 using their evaluation values. The motion path can thus be set appropriately.

The evaluation value may be based on at least one of the distance between the robot 10 and the obstacle 60 on the candidate non-interference path 135 or the proximity of the candidate non-interference path 135 to the initial-position tentative motion path 130. This allows selection of the candidate non-interference path 135 that is appropriate for use to set the motion path of the robot 10.

Note that, in step s26, the path setter 22 may set the motion path without using evaluation values. For example, the path setter 22 may select any one of the multiple candidate non-interference paths 135 and set the motion path based on the selected candidate non-interference path 135.

In the process illustrated in FIG. 24 described above, the path setter 22 may set the motion path based on evaluation values. In this case, the path setter 22 performs the interference determination process for each of the predetermined number T of tentative motion paths 235 in step s14. When the predetermined number T of tentative motion paths 235 include multiple candidate non-interference paths 235 as a result of step s14, the path setter 22 calculates evaluation values for the multiple candidate non-interference paths 235 in step s15 as described above. Each of the evaluation values may be calculated based on, for example, the distance between the robot 10 and the obstacle 60 on the corresponding candidate non-interference path 235 or based on the proximity of the corresponding candidate non-interference path 235 to the tentative motion path 235. The path setter 22 selects the candidate non-interference path 235 with the greatest evaluation value from the multiple candidate non-interference paths 235. The path setter 22 sets, as the motion path of the robot 10 from the starting point 120 to the ending point 121, a path including a part of the motion path that is previously set and the selected candidate non-interference path 235.

### Example Setting of Motion Path Based on Configuration Space

In the above examples, the controller 2 sets the motion path of the robot 10 based on the physical workspace 100. However, the controller 2 may set the motion path of the robot 10 based on a configuration space (C-space) 500 of the robot 10.

The C-space 500 is, for example, an N-dimensional space defined by N parameters as axis values representing the posture of the robot 10 (N is an integer greater than or equal to 2). For example, N = 6. The C-space 500 is a six-dimensional space defined by the six parameters θa, θb, θc, θd, θe, and θf as axis values. The N axes of the C-space 500 are orthogonal to each other. Note that the physical workspace 100 may be an N-dimensional space, where N = 3.

The values of the parameters θa, θb, θc, θd, θe, and θf are respectively indicated by an, bn, cn, dn, en, and fn, where n is a variable that is, for example, an integer greater than or equal to 0. The coordinates of a point (in other words, the coordinates of a position) in the C-space 500 are indicated by (an, bn, cn, dn, en, fn).

A position in the C-space 500 corresponds to a specific posture of the robot 10 in the physical workspace 100. In other words, the coordinates of a position in the C-space 500 represent a specific posture of the robot 10 in the physical workspace 100. For example, the coordinates of a position in the C-space 500 may be (a0, b0, c0, d0, e0, f0). The coordinates (a0, b0, c0, d0, e0, f0) represent the posture of the robot 10 at the time when the arm 11 of the robot 10 has the rotation angles θa, θb, θc, θd, θe, and θf respectively having values of a0, b0, c0, d0, e0, and f0. When the posture of the robot 10 in the physical workspace 100 is determined, the position of the predetermined portion P of the robot 10 in the physical workspace 100 is determined. Thus, the coordinates of each position in the C-space 500 may represent the position of the predetermined portion P of the robot 10 in the physical workspace 100.

The operation of the controller 2 (specifically, the operations of the candidate obtainer 20, the determiner 21, and the path setter 22) for setting the motion path of the robot 10 based on the C-space 500 is basically the same as or similar to the operation for setting the motion path of the robot 10 based on the physical workspace 100. The operation of the controller 2 for setting the motion path of the robot 10 based on the C-space 500 will now be described focusing on its differences from the operation of the controller 2 for setting the motion path of the robot 10 based on the physical workspace 100. The above explanation for a three-dimensional space will be hereafter generalized to an N-dimensional space as appropriate.

### Operation Example of Candidate Obtainer

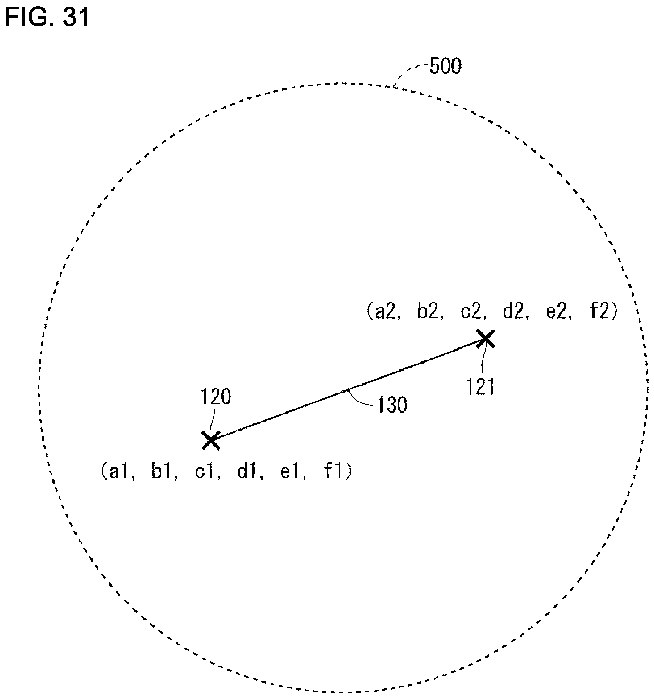

As illustrated in FIG. 31, the candidate obtainer 20 can obtain multiple candidate motion paths 135 from the starting point 120 to the ending point 121 of the robot motion in the C-space 500 based on the shortest tentative motion path 130 connecting the starting point 120 and the ending point 121. For ease of explanation, the C-space 500 is a circle in FIGs. 31 and subsequent figures. In this example, the coordinates of the starting point 120 are (a1, b1, c1, d1, e1, f1), and the coordinates of the ending point 121 are (a2, b2, c2, d2, e2, f2).

The coordinates of the starting point 120 in the C-space 500 represent, for example, the posture of the robot 10 at the time when the robot 10 holding the target object 50 starts the transfer motion to transfer the target object 50 to the tray 18. At the start of the transfer motion, the rotation angles θa, θb, θc, θd, θe, and θf of the arm 11 respectively have values a1, b1, c1, d1, e1, and f1. The ending point 121 in the C-space 500 represents, for example, the posture of the robot 10 at the time when the robot 10 ends the transfer motion. At the end of the transfer motion, the rotation angles θa, θb, θc, θd, θe, and θf of the arm 11 respectively have values a2, b2, c2, d2, e2, and f2. In the C-space 500, the line connecting the starting point 120 and the ending point 121 represents the change in the posture of the robot 10 from the start to the end of the transfer motion. In the C-space 500, the motion path of the robot 10 is represented as the change in the posture of the robot 10.

In the C-space 500, the shortest tentative motion path 130 connecting the starting point 120 and the ending point 121 is indicated by the line segment connecting the starting point 120 and the ending point 121.

The coordinates of a point in an N-dimensional space are indicated by (H1, H2, ..., HN). The line segment from one point to another point in an N-dimensional space (in other words, a straight line) may be referred to as a collection of points with their coordinates expressed in Formula 1 below using a parameter t.

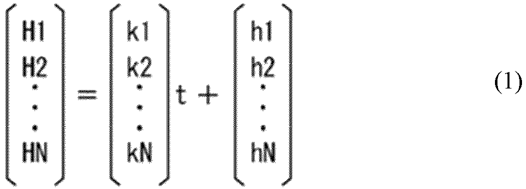

In Formula 1, k1 to kN and h1 to hN are constants. The position and the length of the line segment in an N-dimensional space are determined by the range of values of the parameter t. The coordinates of each point on the tentative motion path 130 in the C-space 500 can be expressed in the same manner as or in a similar manner to Formula 1. The coordinates of each point on the tentative motion path 130 in the physical workspace 100 can be expressed in the same manner as or in a similar manner to Formula 1.

In the C-space 500 as well, the candidate obtainer 20 can obtain a predetermined number T of candidate motion paths 135 by at least shifting or deforming at least a part of the tentative motion path 130 as described above.

A plane in a three-dimensional space such as the physical workspace 100 is generally referred to as a hyperplane in an N-dimensional space. The hyperplane is an (N - 1)-dimensional plane. The plane 150 described above may also be referred to as a hyperplane 150. Figures and subspaces in an N-dimensional space are referred to as manifolds. The hyperplane may thus be a type of manifold. The hyperplane may be an (N - 1)-dimensional manifold.

In the C-space 500, the candidate obtainer 20 can obtain one candidate motion path 135 by parallelly shifting the tentative motion path 130 in the first direction 141 orthogonal to the tentative motion path 130 to cause the tentative motion path 130 to pass through a waypoint that is set on the hyperplane 150 orthogonal to the tentative motion path 130, as in the example described above. In an N-dimensional space, a hyperplane orthogonal to a line segment is a hyperplane on which the inner product of any vector connecting two points on the hyperplane and the vector connecting the two ends of the line segment is zero. Thus, the inner product of any vector connecting two points on the hyperplane 150 and the vector connecting the two ends of the tentative motion path 130 is zero.

The position of a waypoint on the hyperplane 150 can be expressed in polar coordinates, as in the example described above. For the (N - 1)-dimensional hyperplane 150, (N - 1) axes orthogonal to each other are set, separately from the N axes of the C-space 500. The position of a waypoint in an (N - 1)-dimensional manifold (space) defined by the (N - 1) axes is expressed in polar coordinates. In this case, the position of the waypoint on the hyperplane 150 is represented by a group (r, γ1, γ2, ..., γN - 2) of the distance r from the origin of the (N - 1)-dimensional manifold to the waypoint and (N - 2) angles γ1 to γN - 2. The candidate obtainer 20 can change the position (r, γ1, γ2, ..., γN - 2) of the waypoint by changing the combination of setting values for the distance r and the angle γ1 to γN - 2. In other words, the candidate obtainer 20 can obtain multiple candidate motion paths 135 in the C-space 500 by changing the combination of the setting values for the distance r and the angles γ1 to γN - 2.

The candidate obtainer 20 may divide the hyperplane 150 in a grid pattern in the C-space 500 and set each grid point on the hyperplane 150 as a waypoint, as in the example described above. To divide the (N - 1)-dimensional hyperplane 150 in a grid pattern, (N - 1) axes orthogonal to each other are set for the (N - 1)-dimensional hyperplane 150, separately from the N axes of the C-space 500. For each of the (N - 1) axes, the hyperplane 150 is divided into Q sections along the axis (Q is an integer greater than or equal to 2). Thus, the (N - 1)-dimensional hyperplane 150 includes the (N - 1)th power of Q grid points. The candidate obtainer 20 can obtain multiple candidate motion paths 135 in the C-space 500 by changing the grid point to be selected as a waypoint from the (N - 1)th power of Q grid points.

In the C-space 500, the candidate obtainer 20 can also obtain multiple candidate motion paths 135 by rotationally shifting the tentative motion path 130 as in the example described above. For a manifold in an N-dimensional space, for example, _{N}C₂ rotation axes may be defined using a symbol representing the number of combinations. The candidate obtainer 20 can obtain one candidate motion path 135 by, for example, rotating the tentative motion path 130 about at least one of the _{N}C₂ rotation axes. When the _{N}C₂ rotation axes include a rotation axis parallel to the tentative motion path 130, the candidate obtainer 20 may not rotate the tentative motion path 130 about this rotation axis. The candidate obtainer 20 can obtain multiple candidate motion paths 135 by changing the rotation axis to be selected from the _{N}C₂ rotation axes. The candidate obtainer 20 can obtain multiple candidate motion paths 135 by changing the rotation angle of the tentative motion path 130 to be rotated about a rotation axis.

In the C-space 500, the candidate obtainer 20 can also obtain multiple candidate motion paths 135 by deforming the tentative motion path 130 as in the example described above. For example, the candidate obtainer 20 can obtain multiple candidate motion paths 135 by deforming the tentative motion path 130 into a Bézier curve, a quadratic curve, or a spline curve in the C-space 500. In an N-dimensional space as well, three points may be set to define a Bézier curve, a quadratic curve, or a spline curve. For example, the starting point 120, the ending point 121, and another point may be set in the C-space 500. These points can define a Bézier curve, a quadratic curve, or a spline curve connecting the starting point 120 and the ending point 121. Each of the tentative motion path 130, the candidate motion paths, and the motion path set by the path setter 22 in the C-space 500 is represented by a collection of multiple points (e.g., several tens of points) in the C-space 500.

### Operation Example of Determiner

The representation of the obstacle 60 in the C-space 500 will be described first. A point on the obstacle 60 in the physical workspace 100 is referred to as an obstacle point. In the physical workspace 100, the determiner 21 determines all the postures of the robot 10 that includes an obstacle point. In other words, the determiner 21 determines all the postures of the robot 10 that interferes with an obstacle point in the physical workspace 100. The determiner 21 performs this process for each obstacle point on the obstacle 60. **In** the C-space 500, the determiner 21 sets multiple points corresponding to the determined respective postures of the robot 10. An area including the multiple points represents the obstacle 60 in the C-space 500. This area may be hereafter referred to as a C-space obstacle 60c.

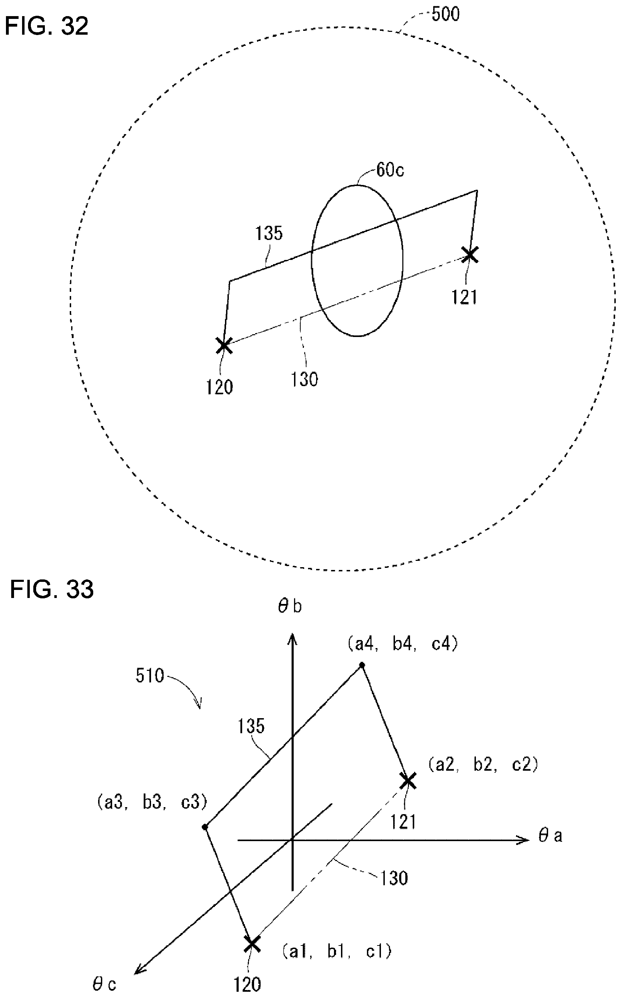

The area of the C-space obstacle 60c in the C-space 500 represents a robot posture of the robot 10 that interferes with the obstacle 60 in the physical workspace 100. The C-space obstacle 60c may also be referred to as an interference area. **In** the interference determination process, the determiner 21 determines that the robot 10 interferes with the obstacle 60 on the focused candidate motion path 135 when the focused candidate motion path 135 interferes with the C-space obstacle 60c in the C-space 500 as illustrated in FIG. 32. In other words, the determiner 21 determines that the robot 10 interferes with the obstacle 60 on the focused candidate motion path 135 when the focused candidate motion path 135 meets the C-space obstacle 60c in the C-space 500. In still other words, the determiner 21 determines that the robot 10 interferes with the obstacle 60 on the focused candidate motion path 135 when at least one of multiple points representing the focused candidate motion path 135 is included in the C-space obstacle 60c in the C-space 500. The determiner 21 determines that the robot 10 does not interfere with the obstacle 60 on the focused candidate motion path 135 when the focused candidate motion path 135 does not interfere with the C-space obstacle 60c in the C-space 500, or in other words, when the focused candidate motion path 135 does not meet the C-space obstacle 60c in the C-space 500. In still other words, the determiner 21 determines that the robot 10 does not interfere with the obstacle 60 on the focused candidate motion path 135 when none of the multiple points representing the focused candidate motion path 135 is included in the C-space obstacle 60c in the C-space 500.

Note that, in the C-space 500, the candidate obtainer 20 can also obtain multiple candidate motion paths 135 by at least shifting or deforming a part of the tentative motion path 130 as in the example described above. For example, the candidate obtainer 20 can obtain multiple candidate motion paths 135 by shifting a path segment of the tentative motion path 130 including an area that interferes with the C-space obstacle 60c (in other words, an area that meets the C-space obstacle 60c) in the C-space 500.

In this manner, the determiner 21 can perform the interference determination process in the C-space 500. Note that the determiner 21 is to reflect constraints on the posture of the robot 10 in the interference determination process in the C-space 500, in a similar manner to the determiner 21 reflecting the motion range and the inaccessible area of the robot 10 and the singular point of the robot posture in the interference determination process in the physical workspace 100. Such constraints include, for example, the coordinates in the C-space 500 corresponding to the motion range of the robot 10.

### Operation Example of Path Setter

In the C-space 500, the path setter 22 can set the motion path by deforming the candidate non-interference path 135 as described above. For example, the path setter 22 may set, as the motion path, the candidate non-interference path 135 that has been deformed to cut off its corner in the C-space 500. The corner of the candidate non-interference path 135 in the C-space 500 may be cut off as in the physical workspace 100.

In the C-space 500 as well, the path setter 22 can perform the process illustrated in FIG. 24 described above. In the C-space 500, the interference portion 136 of the candidate motion path 135 on which the robot 10 first interferes with the C-space obstacle 60c is, geometrically, a portion of the candidate motion path 135 that first meets the C-space obstacle 60c as viewed from the starting point 120 toward the ending point 121.

### Others

In the above examples, the candidate obtainer 20 obtains multiple candidate motion paths 135 in the C-space 500 defined by the six parameters θa, θb, θc, θd, θe, and θf as axis values. However, the candidate obtainer 20 may obtain multiple candidate motion paths 135 in the same or similar manner in a restricted configuration space (also referred to as a restricted C-space) 510 defined by some of the six parameters θa, θb, θc, θd, θe, and θ as axis values. For example, the restricted C-space 510 uses multiple main parameters of the six parameters θa, θb, θc, θd, θe, and θf that determine the robot posture as axis values. In this example, the robot posture is not substantially affected by the rotation of the distal end of the arm 11. Thus, the multiple main parameters that determine the robot posture are the parameters θa, θb, and θc. The candidate obtainer 20 obtains candidate motion paths 135 in the restricted C-space 510 defined by the parameters θa, θb, and θc as axis values. The coordinates of a point in the restricted C-space 510 are indicated by (an, bn, cn).

FIG. 33 is a schematic diagram of an example of the restricted C-space 510. The candidate obtainer 20 can obtain multiple candidate motion paths 135 from the starting point 120 to the ending point 121 of the robot motion in the restricted C-space 510 based on the shortest tentative motion path 130 connecting the starting point 120 and the ending point 121. The coordinates of the starting point 120 in the restricted C-space 510 represent, for example, the general posture of the robot 10 at the time when the robot 10 starts the transfer motion. The coordinates of the starting point 120 in the restricted C-space 510 represent the rotation angles θa, θb, and θc of the arm 11 at the start of the transfer motion. The ending point 121 in the restricted C-space 510 represents, for example, the general posture of the robot 10 at the time when the robot 10 ends the transfer motion. The coordinates of the ending point 121 in the restricted C-space 510 represent the rotation angles θa, θb, and θc of the arm 11 at the end of the transfer motion. In the restricted C-space 510, the candidate obtainer 20 obtains multiple candidate motion paths 135 by at least shifting or deforming at least a part of the tentative motion path 130 as described above. In FIG. 33, the candidate motion path 135 includes a corner represented by the coordinates (a3, b3, c3) and another corner represented by the coordinates (a4, b4, c4).

The determiner 21 performs the interference determination process in the C-space 500 as in the example described above, rather than in the restricted C-space 510. In this case, the determiner 21 first remaps the candidate motion path 135 from the restricted C-space 510 to the C-space 500.

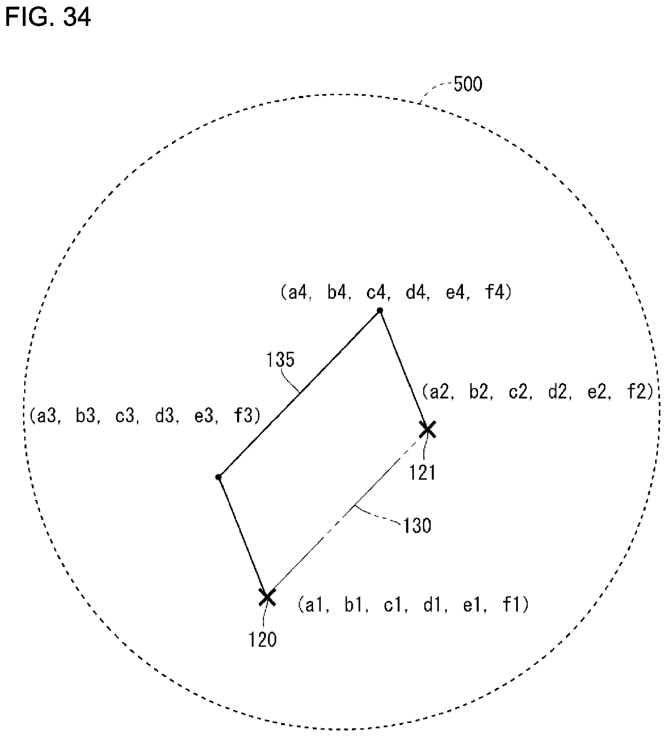

FIG. 34 is a schematic diagram of the candidate motion path 135 illustrated in FIG. 33 being remapped to the C-space 500 in an example. For each position on the focused candidate motion path 135, the determiner 21 uses the coordinate values θa, θb, and θc in the restricted C-space 510 directly as the coordinate values θa, θb, and θc in the C-space 500.

The determiner 21 then sets the coordinate values θd, θe, and θf at each position on the focused candidate motion path 135 in the C-space 500. The determiner 21 sets the coordinate values θd, θe, and θf at each position on the focused candidate motion path 135 in the C-space 500 independently of the coordinate values θa, θb, and θc at each position on the focused candidate motion path 135 in the C-space 500.

The determiner 21 sets, for example, the coordinate value θd at each position on the focused candidate motion path 135 in the C-space 500 based on the coordinate value θd at each of the starting point 120 and the ending point 121 in the C-space 500. **In** the same or similar manner, the determiner 21 sets, for example, the coordinate value θe at each position on the focused candidate motion path 135 in the C-space 500 based on the coordinate value θe at each of the starting point 120 and the ending point 121 in the C-space 500. In the same or similar manner, the determiner 21 sets, for example, the coordinate value θf at each position on the focused candidate motion path 135 in the C-space 500 based on the coordinate value θf at each of the starting point 120 and the ending point 121 in the C-space 500.

Note that the robot posture is predetermined at the start and the end of the motion for a task. Thus, the coordinate values θa, θb, θc, θd, θe, and θf at each of the starting point 120 and the ending point 121 in the C-space 500 are preset. In the C-space 500, the coordinate values θd, θe, and θf at the end of the focused candidate motion path 135 corresponding to the starting point 120 are respectively set to d1, e1, and f1. In the C-space 500, the coordinate values θd, θe, and θf at the end of the focused candidate motion path 135 corresponding to the ending point 121 are respectively set to d2, e2, and f2.

The determiner 21 may determine, for example, a setting value for the coordinate value θd at each position on the focused candidate motion path 135 in the C-space 500 to change the setting value gradually (e.g., linearly) from d1 (the coordinate value θd at the starting point 120) to d2 (the coordinate value θd at the ending point 121) as viewed from the starting point 120 toward the ending point 121. In the same or similar manner, the determiner 21 may determine, for example, a setting value for the coordinate value θe at each position on the focused candidate motion path 135 in the C-space 500 to change the setting value gradually (e.g., linearly) from e1 to e2 as viewed from the starting point 120 toward the ending point 121. In the same or similar manner, the determiner 21 may determine, for example, a setting value for the coordinate value θf at each position on the focused candidate motion path 135 in the C-space 500 to change the setting value gradually (e.g., linearly) from f1 to f2 as viewed from the starting point 120 toward the ending point 121.

In the example in FIG. 34, the candidate motion path 135 includes, in the C-space 500, a corner adjacent to the starting point 120 that is represented by the coordinates (a3, b3, c3, d3, e3, f3), and a corner adjacent to the ending point 121 that is represented by the coordinates (a4, b4, c4, d4, e4, f4). For example, the value d3 is closer to the value d1 than the value d4, and the value d4 is closer to the value d2 than the value d3. In the same or similar manner, for example, the value e3 is closer to the value e1 than the value e4, and the value e4 is closer to the value e2 than the value e3. In the same or similar manner, for example, the value f3 is closer to the value f1 than the value f4, and the value f4 is closer to the value f2 than the value f3.

In the interference determination process, the determiner 21 determines whether the robot 10 interferes with the obstacle 60 on the candidate motion path 135 remapped to the C-space 500. The path setter 22 sets the motion path of the robot 10 in the C-space 500 based on the determination result from the determiner 21.

In this manner, the candidate obtainer 20 can obtain multiple candidate motion paths 135 in the restricted C-space 510 defined by the multiple main parameters θa, θb, and θc that determine the robot posture as axis values. This can efficiently set the motion path using fewer candidate motion paths 135.

When the motion path of the robot 10 is set in the C-space 500, the controller 2 can set the motion of each of the joints of the arm 11 on the set motion path as described above. When the motion path of the robot 10 is set in the C-space 500, the coordinate values θa, θb, θc, θd, θe, and θf at a set path point on the set motion path in the C-space 500 each indicate the set rotation angle θ of the corresponding joint at the set path point.

Note that the controller 2 may perform the process for the physical workspace 100 and the process for the C-space 500 in a mixed manner. For example, the determiner 21 may remap a candidate motion path 135 from the C-space 500 to the physical workspace 100 and perform the interference determination process for the candidate motion path 135 in the physical workspace 100. The determiner 21 may instead remap a candidate motion path 135 from the physical workspace 100 to the C-space 500 and perform the interference determination process for the candidate motion path 135 in the C-space 500.

The motion path setting device has been described in detail, but the above structures are illustrative in all respects, and the present disclosure is not limited to the above structures. The above embodiments may be combined in any manner unless any contradiction arises. Many variations not specifically described above may also be contemplated without departing from the scope of the present disclosure.

The present disclosure provides the structures described below.

In one embodiment, (1) a motion path setting device includes a candidate obtainer, a determiner, and a path setter. The candidate obtainer obtains a plurality of candidate motion paths from a starting point to an ending point of a robot motion based on a first tentative motion path in a multidimensional space being a physical workspace of a robot or a configuration space of the robot. The first tentative motion path is a shortest path connecting the starting point and the ending point. The determiner determines whether the robot interferes with an obstacle on at least one of the plurality of candidate motion paths. The path setter sets a motion path of the robot based on a determination result from the determiner.

(2) In the motion path setting device according to (1), the candidate obtainer obtains the plurality of candidate motion paths by at least shifting or deforming at least a part of the first tentative motion path in the multidimensional space.

(3) In the motion path setting device according to (2), the candidate obtainer obtains at least one of the plurality of candidate motion paths by parallelly shifting at least a part of the first tentative motion path.

(4) In the motion path setting device according to (3), the candidate obtainer obtains at least one of the plurality of candidate motion paths by parallelly shifting at least a part of the first tentative motion path in a first direction orthogonal to the first tentative motion path.

(5) In the motion path setting device according to (4), the candidate obtainer obtains at least one of the plurality of candidate motion paths by parallelly shifting at least a part of the first tentative motion path in a second direction parallel to the first tentative motion path and in the first direction.

(6) In the motion path setting device according to any one of (2) to (5), the candidate obtainer obtains at least one of the plurality of candidate motion paths by rotationally shifting at least a part of the first tentative motion path.

(7) In the motion path setting device according to any one of (2) to (6), the candidate obtainer obtains at least one of the plurality of candidate motion paths by shifting a path segment of the first tentative motion path connecting the starting point and the ending point, and the path segment includes an area in which the robot interferes with the obstacle.

(8) In the motion path setting device according to any one of (2) to (7), the candidate obtainer obtains at least one of the plurality of candidate motion paths by shifting a path segment of the first tentative motion path connecting the starting point and the ending point, and the path segment includes an area interfering with the obstacle.

(9) In the motion path setting device according to any one of (2) to (8), the candidate obtainer obtains, as one candidate motion path of the plurality of candidate motion paths, a path including at least a part of the shifted first tentative motion path with one end of the at least the part of the shifted first tentative motion path connected to the starting point and another end of the at least the part of the shifted first tentative motion path connected to the ending point. When the robot is determined not to interfere with the obstacle on the one candidate motion path, the candidate motion path is deformed, and the path setter sets the deformed candidate motion path as the motion path.

(10) In the motion path setting device according to any one of (2) to (9), when the robot is determined to interfere with the obstacle on each of the plurality of candidate motion paths, the path setter identifies, from the plurality of candidate motion paths, a candidate motion path including an interference portion farthest from the starting point in a direction in which the starting point and the ending point are connected, and the interference portion is a portion on which the robot first interferes with the obstacle. The path setter sets, as a part of the motion path, a path segment of the identified candidate motion path from the starting point to the interference portion. The path setter sets at least a part of a portion of the motion path other than the path segment based on a result from at least shifting or deforming at least a part of a second tentative motion path being a shortest path connecting the interference portion and the ending point.

(11) In the motion path setting device according to any one of (1) to (10), the plurality of candidate motion paths includes a plurality of candidate non-interference paths on which the robot is determined not to interfere with the obstacle, and the path setter calculates predetermined evaluation values for the plurality of respective candidate non-interference paths. The path setter sets the motion path based on a non-interference path selected from the plurality of candidate non-interference paths based on the evaluation values.

(12) In the motion path setting device according to (11), each of the evaluation values is based on at least one of a distance between the robot and the obstacle on a corresponding candidate non-interference path of the plurality of candidate non-interference paths or proximity of the corresponding candidate non-interference path to the first tentative motion path connecting the starting point and the ending point.

(13) In the motion path setting device according to any one of (1) to (12), the candidate obtainer obtains the plurality of candidate motion paths each being a path of a predetermined portion of the robot in the physical workspace being the multidimensional space.

(14) In the motion path setting device according to any one of (1) to (13), the determiner determines whether the robot interferes with an obstacle on each of the plurality of candidate motion paths in a configuration space defined by a plurality of parameters as axis values, and the plurality of parameters represents a posture of the robot.

(15) In the motion path setting device according to any one of (1) to (14), the candidate obtainer obtains the plurality of candidate motion paths based on the first tentative motion path in a restricted configuration space being the multidimensional space, the restricted configuration space is defined by a plurality of main parameters as axis values, and the plurality of main parameters is included in a plurality of parameters representing a posture of the robot and determines the posture.

(16) A program causes a computer to perform operations including obtaining a plurality of candidate motion paths from a starting point to an ending point of a robot motion based on a tentative motion path in a multidimensional space being a physical workspace of a robot or a configuration space of the robot, determining whether the robot interferes with an obstacle on at least one of the plurality of candidate motion paths, and setting a motion path of the robot based on a result of the determining. The tentative motion path is a shortest path connecting the starting point and the ending point.

### REFERENCE SIGNS

1 motion path setting device
10 robot
20 candidate obtainer
21 determiner
22 path setter
30 program
60 obstacle
100 physical workspace
120 starting point
121 ending point
130, 130f, 130i, 130v, 230 tentative motion path
135, 135a, 135b, 135c, 135d, 235 candidate motion path
136, 136a, 136b, 136c, 136d interference portion
137, 137a, 1300 path segment
141 first direction
142, 142a, 142b second direction
500 configuration space
510 restricted configuration space
θa, θb, θc, θd, θe, θf parameter

## Claims

1. A motion path setting device, comprising:
a candidate obtainer configured to obtain a plurality of candidate motion paths from a starting point to an ending point of a robot motion based on a first tentative motion path in a multidimensional space being a physical workspace of a robot or a configuration space of the robot, the first tentative motion path being a shortest path connecting the starting point and the ending point;
a determiner configured to determine whether the robot interferes with an obstacle on at least one of the plurality of candidate motion paths; and
a path setter configured to set a motion path of the robot based on a determination result from the determiner.

2. The motion path setting device according to claim 1, wherein
the candidate obtainer obtains the plurality of candidate motion paths by at least shifting or deforming at least a part of the first tentative motion path in the multidimensional space.

3. The motion path setting device according to claim 2, wherein
the candidate obtainer obtains at least one of the plurality of candidate motion paths by parallelly shifting at least a part of the first tentative motion path.

4. The motion path setting device according to claim 3, wherein
the candidate obtainer obtains at least one of the plurality of candidate motion paths by parallelly shifting at least a part of the first tentative motion path in a first direction orthogonal to the first tentative motion path.

5. The motion path setting device according to claim 4, wherein
the candidate obtainer obtains at least one of the plurality of candidate motion paths by parallelly shifting at least a part of the first tentative motion path in a second direction parallel to the first tentative motion path and in the first direction.

6. The motion path setting device according to any one of claims 2 to 5, wherein
the candidate obtainer obtains at least one of the plurality of candidate motion paths by rotationally shifting at least a part of the first tentative motion path.

7. The motion path setting device according to any one of claims 2 to 6, wherein
the candidate obtainer obtains at least one of the plurality of candidate motion paths by shifting a path segment of the first tentative motion path connecting the starting point and the ending point, and the path segment includes an area in which the robot interferes with the obstacle.

8. The motion path setting device according to any one of claims 2 to 7, wherein
the candidate obtainer obtains at least one of the plurality of candidate motion paths by shifting a path segment of the first tentative motion path connecting the starting point and the ending point, and the path segment includes an area interfering with the obstacle.

9. The motion path setting device according to any one of claims 2 to 8, wherein
the candidate obtainer obtains, as one candidate motion path of the plurality of candidate motion paths, a path including at least a part of the shifted first tentative motion path with one end of the at least the part of the shifted first tentative motion path connected to the starting point and another end of the at least the part of the shifted first tentative motion path connected to the ending point, and
when the robot is determined not to interfere with the obstacle on the one candidate motion path, the candidate motion path is deformed, and the path setter sets the deformed candidate motion path as the motion path.

10. The motion path setting device according to any one of claims 2 to 9, wherein
when the robot is determined to interfere with the obstacle on each of the plurality of candidate motion paths, the path setter identifies, from the plurality of candidate motion paths, a candidate motion path including an interference portion farthest from the starting point in a direction in which the starting point and the ending point are connected, and the interference portion is a portion on which the robot first interferes with the obstacle,
the path setter sets, as a part of the motion path, a path segment of the identified candidate motion path from the starting point to the interference portion, and
the path setter sets at least a part of a portion of the motion path other than the path segment based on a result from at least shifting or deforming at least a part of a second tentative motion path being a shortest path connecting the interference portion and the ending point.

11. The motion path setting device according to any one of claims 1 to 10, wherein
the plurality of candidate motion paths includes a plurality of candidate non-interference paths on which the robot is determined not to interfere with the obstacle, and the path setter calculates predetermined evaluation values for the plurality of respective candidate non-interference paths, and
the path setter sets the motion path based on a non-interference path selected from the plurality of candidate non-interference paths based on the evaluation values.

12. The motion path setting device according to claim 11, wherein
each of the evaluation values is based on at least one of a distance between the robot and the obstacle on a corresponding candidate non-interference path of the plurality of candidate non-interference paths or proximity of the corresponding candidate non-interference path to the first tentative motion path connecting the starting point and the ending point.

13. The motion path setting device according to any one of claims 1 to 12, wherein
the candidate obtainer obtains the plurality of candidate motion paths each being a path of a predetermined portion of the robot in the physical workspace being the multidimensional space.

14. The motion path setting device according to any one of claims 1 to 13, wherein
the determiner determines whether the robot interferes with an obstacle on each of the plurality of candidate motion paths in a configuration space defined by a plurality of parameters as axis values, and the plurality of parameters represents a posture of the robot.

15. The motion path setting device according to any one of claims 1 to 14, wherein
the candidate obtainer obtains the plurality of candidate motion paths based on the first tentative motion path in a restricted configuration space being the multidimensional space, the restricted configuration space is defined by a plurality of main parameters as axis values, and the plurality of main parameters is included in a plurality of parameters representing a posture of the robot and determines the posture.

16. A program for causing a computer to perform operations comprising:
obtaining a plurality of candidate motion paths from a starting point to an ending point of a robot motion based on a tentative motion path in a multidimensional space being a physical workspace of a robot or a configuration space of the robot, the tentative motion path being a shortest path connecting the starting point and the ending point;
determining whether the robot interferes with an obstacle on at least one of the plurality of candidate motion paths; and
setting a motion path of the robot based on a result of the determining.
